(19)

Europäisches
Patentamt
European
Patent Office
Office européen
des brevets

(11) **EP 4 456 595 A1**

(12) **EUROPEAN PATENT APPLICATION**
published in accordance with Art. 153(4) EPC

(43) Date of publication:
**30.10.2024 Bulletin 2024/44**

(21) Application number: **22909901.5**

(22) Date of filing: **19.12.2022**

(51) International Patent Classification (IPC):
**H04W 24/02** (2009.01)

(52) Cooperative Patent Classification (CPC):
**H04W 24/02; H04W 28/16**

(86) International application number:
**PCT/CN2022/139835**

(87) International publication number:
**WO 2023/116588 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 CN 202111580756**

(71) Applicant: **VIVO MOBILE COMMUNICATION CO.,
LTD.
Dongguan, Guangdong 523863 (CN)**

(72) Inventors:
• **DING, Shengli
Dongguan, Guangdong 523863 (CN)**
• **JIANG, Dajie
Dongguan, Guangdong 523863 (CN)**

(74) Representative: **Conti, Marco
Bugnion S.p.A.
Via di Corticella, 87
40128 Bologna (IT)**

(54) **WIRELESS SENSING PARAMETER DETERMINATION METHOD AND APPARATUS, AND
DEVICE**

(57)    This application relates to the field of integrated sensing and communication. Disclosed are a wireless sensing parameter determining method and apparatus, and a device. The method in embodiments of this application includes: obtaining, by a first device, a first value of a first parameter corresponding to a first target; and configuring, by the first device, a signal parameter of the first target according to the first value of the first parameter, where the signal parameter of the first target is used for indicating signal transmission and echo signal reception at a second moment; and the signal parameter includes: signal transmit power, a transmit end aperture gain, a receive end aperture gain, a transmit beam pointing, and a receive beam pointing, where the second moment is later than the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing.

```
┌─────────────┐
│    Start    │
└─────────────┘
       │
       ▼
┌──────────────────────────────────────────────────────────┐
│ A first device obtains a first value of a first parameter │ ⌐ 201
│ corresponding to a first target                           │
└──────────────────────────────────────────────────────────┘
       │
       ▼
┌──────────────────────────────────────────────────────────┐
│ The first device configures a signal parameter of the     │
│ first target according to the first value of the first     │
│ parameter, where the signal parameter of the              │ ⌐ 202
│ first target is used for indicating signal transmission    │
│ and echo signal reception at a second moment; and the      │
│ signal parameter includes: signal transmit power, a        │
│ transmit end aperture gain, a receive end aperture gain, a │
│ transmit beam pointing, and a receive beam pointing        │
└──────────────────────────────────────────────────────────┘
       │
       ▼
┌─────────────┐
│     End     │
└─────────────┘
```

FIG. 2

Processed by Luminess, 75001 PARIS (FR)

EP 4 456 595 A1

**Description**

**CROSS-REFERENCE TO RELATED APPLICATIONS**

This application claims the priority of Chinese Patent Application No. 202111580756.4 filed in China on December 22, 2021, the entire content of which is hereby incorporated by reference.

**TECHNICAL FIELD**

This application relates to the field of communication and sensing technologies, and specifically, to a wireless sensing parameter determining method and apparatus, and a device.

**BACKGROUND**

A future wireless communication system is expected to provide various high-precision sensing services, for example, indoor positioning for robot navigation, Wi-Fi sensing for smart households, and radar sensing for autonomous vehicles. Sensing and communication systems are usually independently designed and occupy different frequency bands. Further, because millimeter waves and a large-scale multiple input multiple output (multiple input multiple output, MIMO) technology are widely deployed, communication signals in the future wireless communication system usually have a high resolution in both time domain and angle domain, which makes it possible to implement high-precision sensing by using the communication signals. Therefore, it is preferable to jointly design the sensing and communication systems, to enable the systems to share the same frequency band and hardware, to improve frequency and efficiency, and reduce hardware costs. This prompts research on integrated sensing and communication (integrated sensing and communication, ISAC). ISAC may become a key technology in the future wireless communication system, to support many important application scenarios. For example, in a future autonomous vehicle network, autonomous vehicles may obtain a large amount of information from the network, including an ultra-high-resolution map and near-real-time information, to navigate and avoid upcoming traffic jams. In the same case, a radar sensor in the autonomous vehicle may provide a powerful and high-resolution obstacle detection function with a resolution on the order of centimeters. An ISAC technology for the autonomous vehicle provides possibility to achieve high data rate communication and high-resolution obstacle detection by using the same hardware and spectrum resources. Application of ISAC further includes Wi-Fi-based indoor positioning and activity recognition, drone communication and sensing, extended reality (extended reality, XR), integrated radar and communication, and the like. Each application has different requirements, limitations, and supervision problems.

Radar detection, that is, using a reflected echo of a target to measure a distance, a speed, and an angle, may be used as one of important use cases of integrated sensing and communication. However, since a radar technology in an integrated sensing and communication scenario has different constraints and application target, there are many differences between the radar technology and a conventional radar technology.

**SUMMARY**

Embodiments of this application provide a wireless sensing parameter determining method and apparatus, and a device, which can optimize system performance and use of a power resource and an aperture resource in a communication-sensing integrated scenario.

According to a first aspect, a wireless sensing parameter determining method is provided, including:

obtaining, by a first device, a first value of a first parameter corresponding to a first target, where the first device or a second device detects an echo signal of a signal sent at a first moment, to determine the first target; and configuring, by the first device, a signal parameter of the first target according to the first value of the first parameter, where the signal parameter of the first target is used for indicating signal transmission and echo signal reception at a second moment; and the signal parameter includes: signal transmit power, a transmit end aperture gain, a receive end aperture gain, a transmit beam pointing, and a receive beam pointing, where the second moment is later than the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing.

According to a second aspect, a wireless sensing parameter determining apparatus is provided. The apparatus is used in a first device and includes:

a first obtaining module, configured to obtain a first value of a first parameter corresponding to a first target, where the first device or a second device detects an echo signal of a signal sent at a first moment, to determine the first target; and

a first configuration module, configured to configure a signal parameter of the first target according to the first value of the first parameter, where the signal parameter of the first target is used for indicating signal transmission and echo signal reception at a second moment; and the signal parameter includes: signal transmit power, a transmit end aperture gain, a receive end aperture gain, a transmit beam pointing, and a receive beam pointing, where the second moment is after the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing.

According to a third aspect, a communication device is provided, including a processor and a memory, the memory storing a program or instructions executable on the processor, the program or instructions, when executed by the processor, performing the steps of the method according to the first aspect.

According to a fourth aspect, a communication device is provided, including a processor and a communication interface. The processor is configured to: obtain a first value of a first parameter corresponding to a first target, where the first device or a second device detects an echo signal of a signal sent at a first moment, to determine the first target; and configure a signal parameter of the first target according to the first value of the first parameter, where the signal parameter of the first target is used for indicating signal transmission and echo signal reception at a second moment; and the signal parameter includes: signal transmit power, a transmit end aperture gain, a receive end aperture gain, a transmit beam pointing, and a receive beam pointing, where the second moment is later than the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing.

According to a fifth aspect, a readable storage medium is provided. The readable storage medium stores a program or instructions, the program or instructions, when executed by a processor, implementing the steps of the method according to the first aspect.

According to a seventh aspect, a chip is provided, including a processor and a communication interface, where the communication interface is coupled to the processor, and the processor is configured to run a program or instructions to implement the method according to the first aspect.

According to a seventh aspect, a computer program product is provided. The computer program product is stored in a storage medium, and the computer program product is executed by at least one processor to implement the steps of the method according to the first aspect.

In the embodiments of this application, the first device configures the signal transmit power, the transmit end aperture gain, the receive end aperture gain, the transmit beam pointing, and the receive beam pointing of the first target according to the first value of the first parameter corresponding to the first target, so that resource configuration can be optimized in a case that a sensing requirement is met, thereby optimizing performance of an integrated sensing and communication system and the user of the power resource.

## BRIEF DESCRIPTION OF THE DRAWINGS

FIG. 1 is a block diagram of a wireless communication system to which an embodiment of this application is applicable;

FIG. 2 is a flowchart of steps of a wireless sensing parameter determining method according to an embodiment of this application;

FIG. 3 is a first schematic diagram of a connection relationship between a transmit end device, a receive end device, and a sensing function network element in a transmit power determining method according to an embodiment of this application;

FIG. 4 is a second schematic diagram of a connection relationship between a transmit end device, a receive end device, and a sensing function network element in a transmit power determining method according to an embodiment of this application;

FIG. 5 is a third schematic diagram of a connection relationship between a transmit end device, a receive end device, and a sensing function network element in a transmit power determining method according to an embodiment of this application;

FIG. 6 is a schematic diagram of an antenna array element according to an embodiment of this application;

FIG. 7 is a schematic diagram of a structure of a wireless sensing parameter determining apparatus according to an embodiment of this application;

FIG. 8 is a first schematic diagram of a structure of a communication device according to an embodiment of this application; and

FIG. 9 is a second schematic diagram of a structure of a communication device according to an embodiment of this application.

## DETAILED DESCRIPTION

The following clearly describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

In the specification and the claims of this application, the terms "first", "second", and so on are intended to distinguish similar objects but do not necessarily indicate a specific order or sequence. It is to be understood that the term used in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. In addition, "and/or" used in the specification and the claims represents at least one of the connected objects, and a character "/" in this specification generally indicates an "or" relationship between the associated obj ects.

It is to be noted that, the technologies described in the embodiments of this application are not limited to a long term evolution (long term evolution, LTE)/LTE-Advanced (LTE-advanced, LTE-A) system, or may be applied to other wireless communication systems such as code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), single-carrier frequency-division multiple access (single-carrier frequency-division multiple access, SC-FDMA), and another system. In the embodiments of this application, the terms "system" and "network" are usually interchangeably used, and the technology described herein can be applied to the systems and wireless technologies mentioned above, and can also be applied to other systems and wireless technologies. Although the technologies are also applicable to applications other than NR system applications, for example, a 6th generation (6th Generation, 6G) communication system, a new radio (new radio, NR) system is exemplarily described in the following descriptions, and the term "NR" is used in most of the following descriptions.

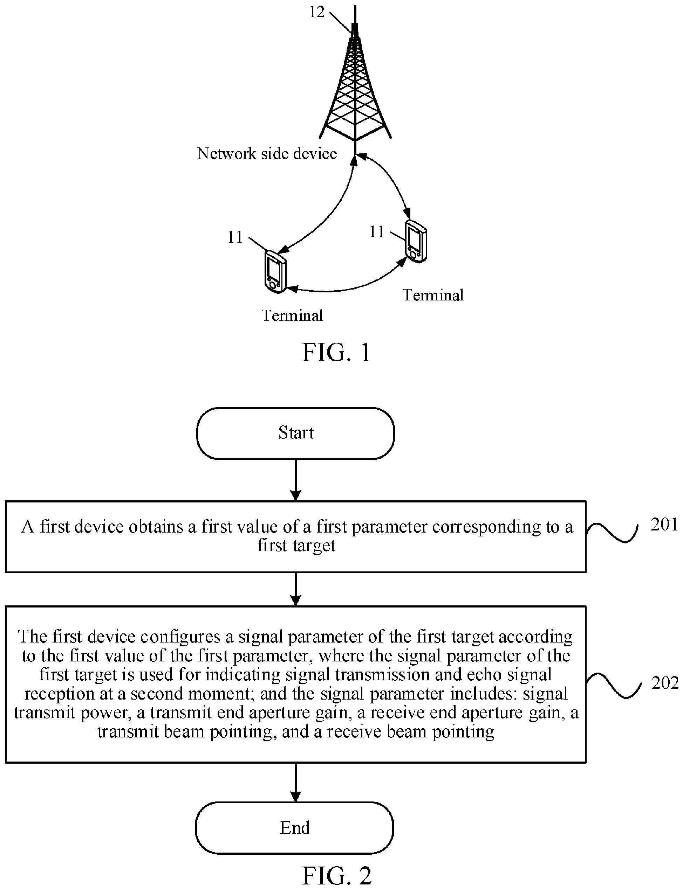

FIG. 1 shows a block diagram of a wireless communication system to which an embodiment of this application is applicable. The communication system includes a terminal 11 and a network side device 12. The terminal 11 may be a terminal side device such as a mobile phone, a tablet personal computer (tablet personal computer), a laptop computer (laptop computer) or notebook computer, a personal digital assistant (personal digital assistant, PDA), a palmtop computer, a notebook, an ultra-mobile personal computer (ultra-mobile personal computer, UMPC), a mobile Internet device (mobile Internet device, MID), an augmented reality (augmented reality, AR)/virtual reality (virtual reality, VR) device, a robot, a wearable device (a wearable device), a vehicle user equipment (vehicle user equipment, VUE), a pedestrian user equipment (pedestrian user equipment, PUE), a smart household (which is a household device having a wireless communication function, for example, a refrigerator, a television, a washing machine, or furniture), a game console, a personal computer (personal computer, PC), a teller machine, self-service machine, or the like. The wearable device includes: a smart watch, a smart bracelet, a smart headset, smart glasses, smart jewelry (a smart bangle, a smart chain bracelet, a smart ring, a smart necklace, a smart ankle bangle, a smart anklet, or the like), a smart wristband, smart clothing, and the like. It is to be noted that, a specific type of the terminal 11 is not limited in the embodiments of this application. The network side device 12 may include an access network device or a core network device. The access network device 12 may also be referred to as a radio access network device, a radio access network (radio access network, RAN), a radio access network function, or a radio access network unit. The access network device 12 may include a base station, a wireless local area network (wireless local area network, WLAN) access point, a Wi-Fi node, or the like. The base station may be referred to as a NodeB, an evolved NodeB (eNB), an access point, a base transceiver station (base transceiver station, BTS), a radio base station, a radio transceiver, a basic service set (basic service set, BSS), an extended service set (extended service set, ESS), a home NodeB, a home evolved NodeB, a transmitting receiving point (transmitting receiving point, TRP), or another suitable term in the field. The base station is not limited to a specific technical term as long as the same technical effect is achieved. It is to be noted that, in the embodiments of this application, the base station in the NR system is only used as an example for description, but a specific type of the base station is not limited.

With reference to the accompanying drawings, a wireless sensing parameter determining method and apparatus, and a device provided in the embodiments of this application are described in detail below by using some embodiments and application scenarios thereof.

In a communication-sensing integrated wireless sensing application, a radar technology may use a monostatic radar mode, or may use a bistatic radar mode.

In the monostatic radar mode, signal receiving and transmission share an antenna, and a received signal and a transmitted signal enter different radio frequency processing links through a circulator. In this mode, detection with no blind zone may be implemented by using continuous wave signal waveforms. A prerequisite is that the received signal and the transmitted signal need to be quite isolated, and isolation of about 100 dB is usually required, to eliminate submerging of the received signal caused by leakage of the transmitted signal. Because a receiver of a monostatic radar has all information about the transmitted signal, signal processing may be performed through filter matching (pulse compression), to obtain a higher signal processing gain.

In the bistatic radar mode, there is no isolation problem between the received signal and the transmitted signal, which greatly simplifies complexity of hardware. Because radar signal processing is based on known information, in the communication-sensing integrated application, radar signal processing may be performed by using some known information such as a synchronization signal, a reference signal, and the like. However, due to periodicity of the synchronization signal, the reference signal, and the like, a blur diagram of the signal waveform is no longer in a thumbtack shape, but in a pegboard shape, a delay and a Doppler blur degree may be increased, and a gain of a main lobe is greatly reduced compared with that in the monostatic radar mode, reducing a range for measuring distances and speeds. An appropriate parameter set is designed, so that the range for measuring distances and speeds can meet measurement requirements of common targets such as a car, a pedestrian, and the like. In addition, measurement precision of the bistatic radar is related to a location of a transceiver station relative to the target, and therefore, it is necessary to select an appropriate transceiver station to improve detection performance.

It is to be noted that, a first device provided in the embodiments of this application may be a base station, a transmission and receiving point (transmission and receiving point, TRP), a user equipment (user equipment, UE), an access point (access point, AP), a reconfigurable intelligence surface (reconfigurable intelligence surface, RIS), or the like.

The wireless sensing parameter determining method provided in the embodiments of this application may be understood as a joint adaptation method of transmit power, an antenna aperture, and a beam direction. Refer to FIG. 2. FIG. 2 is a flowchart of steps of a wireless sensing parameter determining method according to an embodiment of this application. The parameter determining method includes the following steps:

Step 201: A first device obtains a first value of a first parameter corresponding to a first target, where the first device or a second device detects an echo signal of a signal sent at a first moment, to determine the first target; and

Step 202: The first device configures a signal parameter of the first target according to the first value of the first parameter, where the signal parameter of the first target is used for indicating signal transmission and echo signal reception at a second moment, where the signal parameter includes: signal transmit power, a transmit end aperture gain, a receive end aperture gain, a transmit beam pointing, and a receive beam pointing, where

the second moment is later than the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing.

It is to be noted that, the first moment mentioned in this embodiment of this application may be understood as at least one first sensing frame, and the second moment may be understood as at least one second sensing frame. Transmission, receiving, and signal processing on a signal are all implemented by using a sensing frame as a time unit. In other words, signal parameters of signals in the same sensing frame do not change, and an adaptive adjustment method for a signal parameter provided in this embodiment of this application is used to adjust signal parameters in a next one or more sensing frames.

Optionally, in a monostatic radar scenario, the transmit end aperture gain is the same as the receive end aperture gain, and the transmit beam pointing is the same as the receive beam pointing. In a bistatic radar scenario, the transmit end aperture gain may be the same as or different from the receive end aperture gain, and the transmit beam pointing may be the same as or different from the receive beam pointing.

In radar detection, the transmit power, the aperture gain, and the beam direction jointly determine signal power of a target reflected echo, to determine a maximum effect distance under a signal to noise ratio requirement and a signal to noise ratio (signal to noise ratio, SNR) under an effect distance.

A monostatic radar (or referred to as a single-station radar) meets the following relationship:

$$P_r, \quad R^4, \quad SNR \propto P_t \cdot G^2 \cos\theta^2$$

$P_t$ and $P_r$ respectively represent transmit power and received power, R represents a target distance, *SNR* represents a target echo signal to noise ratio, *G* represents a monostatic radar aperture gain, and $\theta$ represents a monostatic radar beam direction.

A bistatic radar (or referred to as a dual-station radar) meets the following relationship:

$$P_r, \quad R_t^2 R_r^2, \quad SNR \propto P_t \cdot G_t \cos\theta_t \cdot G_r \cos\theta_r$$

$P_t$ and $P_r$ respectively represent the transmit power and the received power, $R_t$ and $R_r$ respectively represent a distance between a target and a transmitter and a distance between the target and a receiver, $G_t$ and $G_r$ respectively represent the transmit end aperture gain and the receive end aperture gain, and use a real value as a unit (not using dB as a unit); and $\theta_t$ and $\theta_r$ respectively represent the transmit beam pointing and the receive beam pointing.

In this embodiment of this application, target reflected echo signal power and an echo signal to noise ratio through joint adaptive adjustment on the transmit power, the aperture gain, and the beam direction. Therefore, in this embodiment of this application, the first parameter is defined. In addition, joint adaptive adjustment on the transmit power, the aperture gain, and the beam direction in this embodiment of this application is performed based on a requirement of the first parameter. $P_t \cdot G_t \cos\theta_t \cdot G_r \cos\theta_r$ represents the first parameter; $P_t$ represents the transmit power, and $G_t$ and $G_r$ respectively represent the transmit end aperture gain and the receive end aperture gain; and $\theta_t$ and $\theta_r$ respectively represent the transmit beam pointing and the receive beam pointing. For the monostatic radar, in the first parameter, $G_t = G_r$, and $\theta_t = \theta_r$.

According to at least one embodiment of this application, step 201 includes:

determining, by the first device, the first value of the first parameter corresponding to the first target; or

obtaining, by the first device, the first value of the first parameter corresponding to the first target according to first parameter adjustment information sent by the second device, where the first parameter adjustment information includes any one of the following:
the first value of the first parameter;
a ratio of the first value of the first parameter to a second value of the first parameter; and
a difference between the first value of the first parameter and the second value of the first parameter, where the second value of the first parameter is determined based on a signal parameter corresponding to signal transmission and a signal parameter corresponding to echo signal reception at the first moment.

In other words, the first value of the first parameter may be determined by the first device, or may be determined by the second device and then sent to the first device.

Optionally, if the first value of the first parameter is determined by the second device and then notified to the first device, a manner in which the second device determines the first value of the first parameter is the same as a manner in which the first device determines the first value of the first parameter. Therefore, only the manner in which the first device determines the first value of the first parameter is described below, and the manner in which the second device determines the first value of the first parameter is not repeated again.

Optionally, the first device is a transmit end device of a signal, or a receive end device of a signal, or a sensing function network element. The sensing function network element mentioned in this embodiment of this application is a network node that is in a core network and/or a radio access network and that is responsible for at least one function such as sensing request processing, sensing resource scheduling, sensing information exchange, and sensing data processing, may be a network node updated based on an access and mobility management function (access and mobility management function, AMF) or a location management function (location management function, LMF) in an existing 5th generation mobile communication technology (5th generation mobile communication technology, 5G) network, or may be another existing or newly defined network node. For convenience of description, the network nodes are collectively referred to as sensing function network elements in this application.

It is to be noted that, the transmit end device and the receive end device mentioned in this embodiment of the present invention are the same device in the monostatic radar scenario, and are different devices in the bistatic radar scenario.

Further, it is to be noted that, a device that determines the first value of the first parameter and a device that configures the signal parameter may be the same or different. For example, the device that determines the first value of the first parameter is the transmit end device, and the device that configures the signal parameter may be the transmit end device, the receive end device, or the sensing function network element. This is not specifically limited herein. If the device that determines the first value of the first parameter and the device that configures the signal parameter are different devices, the device that determines the first value of the first parameter needs to send the first parameter adjustment information to the device that configures the signal parameter.

In an optional embodiment, in a case that the device that configures the signal parameter is the transmit end device, the method further includes:

sending, by the transmit end device to a receive end device, the receive end aperture gain and the receive beam pointing that indicate the echo signal reception at the second moment; correspondingly,
sending, by the transmit end device, the signal according to the signal transmit power, the transmit end aperture gain, and the transmit beam pointing; and
receiving, by the receive end device, the echo signal according to the receive end aperture gain and the receive beam pointing.

In another optional embodiment, in a case that the device that configures the signal parameter at the second moment is the receive end device, the method further includes:

sending, by the receive end device to a transmit end device, the signal transmit power, the transmit end aperture gain, and the transmit beam pointing that indicate signal transmission at the second moment; correspondingly,
sending, by the transmit end device, the signal according to the signal transmit power, the transmit end aperture gain, and the transmit beam pointing; and
receiving, by the receive end device, the echo signal according to the receive end aperture gain and the receive beam pointing.

In still another optional embodiment, in a case that the device that configures the signal parameter at the second moment is the sensing function network element, the method further includes:

sending, by the sensing function network element to a transmit end device, the signal transmit power, the transmit end aperture gain, and the transmit beam pointing that indicate the signal transmission at the second moment, and sending, to a receive end device, the receive end aperture gain and the receive beam pointing that indicate the echo signal reception at the second moment; correspondingly,
sending, by the transmit end device, the signal according to the signal transmit power, the transmit end aperture gain, and the transmit beam pointing; and
receiving, by the receive end device, the echo signal according to the receive end aperture gain and the receive beam pointing.

In a bistatic radar (or referred to as a dual-station radar) scenario, if the transmit end device and the receive end device are different devices, a connection relationship and a corresponding information exchange method between the sensing function network element, the transmit end device, and the receive end device may include the following three cases:

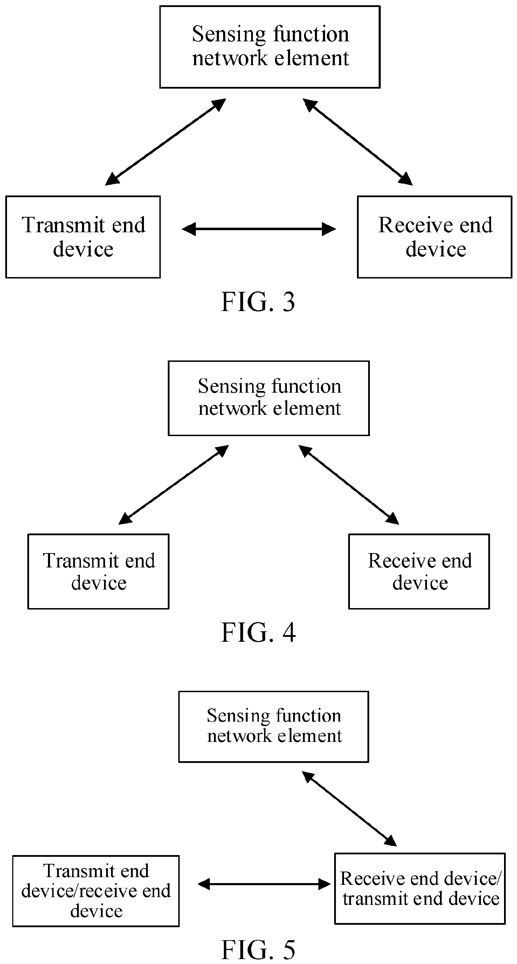

(1) direct communication exists between any two of the sensing function network element, the transmit end device, and the receive end device, as shown in FIG. 3, where in this case, information exchange may be directly performed between any two;
(2) direct communication exists between the sensing function network element and the transmit end device and between the sensing function network element and the receive end device, but direct communication does not exist between the transmit end device and the receive end device, as shown in FIG. 4, where in this case, information exchange may be directly performed between the sensing function network element and the transmit end device or the receive end device, and information exchange between the transmit end device and the receive end device needs to be forwarded through the sensing function network element; and
(3) direct communication exists between the sensing function network element and only one of the transmit end device or the receive end device, and direct communication exists between the transmit end device and the receive end device, as shown in FIG. 5, where in this case, the device in direct communication with the sensing function network element may directly exchange information with the sensing function network element, and the device not in direct communication with the sensing function network element exchanges information with the sensing function network element through the device in direct communication with the sensing function network element for forwarding.

In a monostatic radar (or referred to as a single-station radar) scenario, if the transmit end device and the receive end device are the same device, a connection relationship between the sensing function network element and the transmit end device (that is, the receive end device) is generally direct communication, that is, information exchange may be directly performed between the two. Alternatively, the connection relationship between the two may be connection through a third-party device, so that information exchange may be performed between the two through the third-party device.
In at least one embodiment of this application, the determining, by the first device, the first value of the first parameter corresponding to the first target includes:

determining, by the first device, the first value of the first parameter according to echo signal quality of the first target at the first moment;

or

determining, by the first device, the first value of the first parameter according to a predicted distance value of the first target at the second moment and echo signal quality of the first target at the first moment.

In this embodiment of this application, an adjustment objective of adaptive adjustment on the first parameter is to enable the echo signal quality of the first target to meet a sensing requirement. Within two adjacent moments, a location of the sensing target is approximately equal to a radio carrier station (radio carrier station, RCS). In this case, the echo signal quality of the target is directly proportional to the first parameter, and in this embodiment of this application, adaptive adjustment on the first parameter is performed according to the echo signal quality of the target.

The echo signal quality of the first target includes at least one of the following:

power of the echo signal of the first target;

an SNR of the echo signal of the first target;

a signal-to-noise plus interference ratio (signal-to-noise plus interference ratio, SINR) of the echo signal of the first target;

reference signal received power (reference signal received power, RSRP) of the echo signal of the first target; and

reference signal received quality (reference signal received quality, RSRQ) of the echo signal of the first target.

Optionally, the power of the echo signal of the first target includes at least one of the following:

if the transmitted signal is a sensing dominant signal or an integrated sensing and communication signal, the power of the echo signal of the first target is full power of the echo signal; and

if the transmitted signal is a communication dominant signal or a sensing-enhanced communication dominant signal, for example, a 5G NR signal or a Wi-Fi signal, the power of the echo signal of the first target is power of a preamble (preamble), and/or a synchronization signal, and/or a reference signal in the echo signal, where the reference signal may be a demodulation reference signal (demodulation reference signal, DM-RS), a phase-tracking reference signal (phase-tracking reference signal, PT-RS), a channel state information reference signal (channel state information reference signal, CSI-RS), a positioning reference signal (positioning reference signal, P-RS), a sounding reference signal (sounding reference signal, SRS), or the like.

In at least one embodiment of this application, the objective of performing adaptive adjustment on the first parameter according to the echo signal quality of the first target includes the following objectives.

An objective 1 is to maintain the echo signal quality of the first target near a first preset echo quality. An expression may be $P_{r0} \pm \Delta P_r$, where $P_{r0}$ is the preset first preset echo quality, and $\Delta P_r$ is an allowable echo quality error.

Alternatively, an objective 2 is to maintain the echo signal quality of the first target within a first echo quality range. An expression of the preset first echo quality range may be $[P_{rmin}, P_{rmax}]$, where $P_{rmin}$ is a lower limit of the first echo quality range, and $P_{rmax}$ is an upper limit of a preset echo signal power range.

Optionally, the method further includes:

determining the first preset echo quality or the first echo quality range according to a first condition, where the first condition includes at least one of the following:

echo signal quality of a sensing indicator requirement in the sensing requirement;

echo signal quality corresponding to transmit signal power required by communication quality of a communication function in a communication-sensing integrated application; and

echo signal quality required by an interference level limitation of the communication function in the communication-sensing integrated application.

For example, when the first preset echo quality is a preset echo signal power value, a method for determining the preset echo signal power value includes:

(a) meeting an echo signal power value of the sensing indicator requirement in the sensing requirement, or meeting the sensing indicator requirement in the sensing requirement and reserving the echo signal power value with a margin, where the sensing indicator requirement may be: sensing precision, a detection probability/false alarm probability; and

(b) meeting an echo signal power value corresponding to the transmit signal power required by the communication quality and an echo signal power value required by the interference level limitation of the communication function in the communication-sensing integrated application.

In another example, in a case that the first echo quality range is an echo signal power range, the method for determining the lower limit of the echo signal power range includes:

(a) meeting minimum echo signal received power of the sensing indicator requirement in the sensing requirement, where the sensing indicator requirement may be: sensing precision, a detection probability/false alarm probability; and
(b) meeting an echo signal power value corresponding to a critical transmit signal power value of beam failure in the communication function in the communication-sensing integrated application.

A method for determining the upper limit of the echo signal power range includes:

(a) meeting an echo signal power value corresponding to a sensing indicator reaching a specific level, where the sensing indicator requirement may be: sensing precision, a detection probability/false alarm probability; and
(b) meeting an echo signal power value required by the interference level limitation of the communication function in the communication-sensing integrated application.

According to at least one embodiment of this application, the determining, by the first device, the first value of the first parameter according to echo signal quality of the first target at the first moment includes:

determining the first value of the first parameter according to the second value of the first parameter, the echo signal quality of the first target at the first moment, and first preset echo quality in a case that the echo signal quality of the first target is maintained near the first preset echo quality;
or
determining the first value of the first parameter according to the second value of the first parameter, the echo signal quality of the first target at the first moment, and a first echo quality range in a case that the echo signal quality of the first target is maintained in the first echo quality range, where
the second value of the first parameter is determined based on a signal parameter corresponding to signal transmission and a signal parameter corresponding to echo signal reception at the first moment.

The determining the first value of the first parameter according to the second value of the first parameter, the echo signal quality of the first target at the first moment, and first preset echo quality includes:

determining the first value of the first parameter based on a first formula, where the first formula is:

$$C' = \frac{P_{r0}}{P_r} C$$

where $C'$ represents the first value of the first parameter; C represents the second value of the first parameter; $P_{r0}$ represents the first preset echo quality; and $P_r$ represents the echo signal quality of the first target at the first moment.

The determining the first value of the first parameter according to the second value of the first parameter, the echo signal quality of the first target at the first moment, and a first echo quality range includes:

determining the first value of the first parameter based on a second formula, where the second formula is:

$$C' = \frac{P}{P_r} C$$

where $C'$ represents the first value of the first parameter; C represents the second value of the first parameter; and $P_r$ represents the echo signal quality of the first target at the first moment; and

in a case that $P_r$ is greater than an upper echo quality limit of the first echo quality range, P represents the upper echo quality limit of the first echo quality range, and the second formula is as follows: $C' = \dfrac{P_{r\max}}{P_r} C$ , $P_{r\max}$ representing the upper echo quality limit of the first echo quality range; or

in a case that $P_r$ is less than a lower echo quality limit of the first echo quality range, P represents the lower echo quality limit of the first echo quality range, and the second formula is as follows: $C' = \dfrac{P_{r\min}}{P_r} C$ , $P_{r\min}$ representing the lower echo quality limit of the first echo quality range; or

in any case, P represents an arithmetic mean value or a geometric mean value of an upper echo quality limit and a lower echo quality limit of the first echo quality range, and the second formula is as follows: $C' = \dfrac{P_{rmid}}{P_r} C$ , $P_{rmid}$ representing the arithmetic mean value or the geometric mean value of the upper echo quality limit and the lower echo quality limit of the first echo quality range. The arithmetic mean value may be understood as

$\dfrac{\left(P_{r\max} + P_{r\min}\right)}{2}$ ; and the geometric mean value may be understood as $\sqrt{P_{r\max} P_{r\min}}$ .

In at least one embodiment of this application, the determining, by the first device, the first value of the first parameter according to a predicted distance value of the first target at the second moment and echo signal quality of the first target at the first moment includes:

determining the first value of the first parameter according to the second value of the first parameter, the echo signal quality of the first target at the first moment, first preset echo quality, and the predicted distance value of the first target at the second moment in a case that the echo signal quality of the first target is maintained near the first preset echo quality;
or
determining the first value of the first parameter according to the second value of the first parameter, the echo signal quality of the first target at the first moment, a first echo quality range, and the predicted distance value of the first target at the second moment in a case that the echo signal quality of the first target is maintained in the first echo quality range.

Optionally, a trajectory prediction method is used to obtain a predicted distance value at a next moment: a distance $R'$ of the first target relative to the monostatic radar (in the monostatic radar scenario); or a distance of the first target relative to the transmitter and a distance $R'_r$ of the first target relative to the receiver (in the bistatic radar scenario). In addition, prediction on the distance of the first target at the second moment is based on maintaining a movement trajectory of the first target, and the predicted distance value at the second moment is obtained by predicting a location of the first target at the second moment.

The premise assumption of the prediction method is that when the first target is tracked, since a movement speed of a typical target (for example, a vehicle, a pedestrian, or the like) of the communication-sensing integrated application is low relative to a sensing update rate, a target status change between two consecutive radar detections is relatively small. The small change in the target state mainly means that a change in a target RCS is relatively small. It may be considered that the target RCS remains almost unchanged in two consecutive or several consecutive radar detections. There are two conditions to meet this case. First, target's maneuver is small, that is, an acceleration is small, the location and the speed of the target do not greatly change, and a linear filtering algorithm such as Kalman filtering can be used. Second, sensing channel properties (large-scale and small-scale fading properties) do not greatly change, especially the small-scale fading property does not greatly change. The prediction method is content implemented by a device. This is not limited herein.

The determining the first value of the first parameter according to the second value of the first parameter, the echo signal quality of the first target at the first moment, first preset echo quality, and the predicted distance value of the first target at the second moment includes:

determining the first value of the first parameter based on a third formula, where the third formula is:

$$C' = \left(\frac{R'}{R}\right)^4 \frac{P_{r0}}{P_r} C \quad \text{or} \quad C' = \left(\frac{R_t' R_r'}{R_t R_r}\right)^2 \frac{P_{r0}}{P_r} C,$$

$C'$ represents the first value of the first parameter; C represents the second value of the first parameter; $P_{r0}$ represents the first preset echo quality; $P_r$ represents the echo signal quality of the first target at the first moment; R represents a distance between the first target at the first moment and a signal transceiver device in a monostatic radar scenario; $R'$ represents a predicted distance value between the first target at the second moment and the signal transceiver device in the monostatic radar scenario; $R_t$ represents a distance between the first target at the first moment and a transmit end device in a bistatic radar scenario; $R_t'$ represents a predicted distance value between the first target at the second moment and the transmit end device in the bistatic radar scenario; represents a distance between the first target at the first moment and a receive end device in the bistatic radar scenario; and $R_r'$ represents a predicted distance value between the first target at the second moment and the receive end device in the bistatic radar scenario.

The determining the first value of the first parameter according to the second value of the first parameter, the echo signal quality of the first target at the first moment, a first echo quality range, and the predicted distance value of the first target at the second moment includes:

determining the first value of the first parameter based on a fourth formula, where the fourth formula is:

$$C' = \left(\frac{R'}{R}\right)^4 \frac{P}{P_r} C \quad \text{or} \quad C' = \left(\frac{R_t' R_r'}{R_t R_r}\right)^2 \frac{P}{P_r} C,$$

$C'$ represents the first value of the first parameter; C represents the second value of the first parameter; $P_r$ represents the echo signal quality of the first target at the first moment; R represents a distance between the first target at the first moment and a signal transceiver device in a monostatic radar scenario; $R'$ represents a predicted distance value between the first target at the second moment and the signal transceiver device in the monostatic radar scenario; $R_t$ represents a distance between the first target at the first moment and a transmit end device in a bistatic radar scenario; $R_t'$ represents a predicted distance value between the first target at the second moment and the transmit end device in the bistatic radar scenario; $R_r$ represents a distance between the first target at the first moment and a receive end device in the bistatic radar scenario; and $R_r'$ represents a predicted distance value between the first target at the second moment and the receive end device in the bistatic radar scenario; and

in a case that $P_r$ is greater than an upper echo quality limit of the first echo quality range, P represents the upper echo quality limit of the first echo quality range, and the fourth formula is as follows:
$$C' = \left(\frac{R'}{R}\right)^4 \frac{P_{r\max}}{P_r} C \quad \text{or}$$

$$C' = \left(\frac{R_t' R_r'}{R_t R_r}\right)^2 \frac{P_{r\max}}{P_r} C$$
, $P_{r\max}$ representing the upper echo quality limit of the first echo quality range; or

in a case that $P_r$ is less than a lower echo quality limit of the first echo quality range, P represents the lower echo quality limit of the first echo quality range, and the fourth formula is as follows:
$$C' = \left(\frac{R'}{R}\right)^4 \frac{P_{r\min}}{P_r} C \quad \text{or}$$

$$C' = \left(\frac{R_t' R_r'}{R_t R_r}\right)^2 \frac{P_{r\min}}{P_r} C$$

, $P_{r\min}$ representing the lower echo quality limit of the first echo quality range; or

in any case, P represents an arithmetic mean value or a geometric mean value of an upper echo quality limit and

$$C' = \left(\frac{R'}{R}\right)^4 \frac{P_{rmid}}{P_r} C$$

a lower echo quality limit of the first echo quality range, and the fourth formula is as follows:

$$C' = \left(\frac{R_t' R_r'}{R_t R_r}\right)^2 \frac{P_{rmid}}{P_r} C$$

or , $P_{rmid}$ representing the arithmetic mean value or the geometric mean value of the upper echo quality limit and the lower echo quality limit of the first echo quality range. The arithmetic mean value

$$\left(P_{r\max} + P_{r\min}\right)\Big/ 2$$

may be understood as ; and the geometric mean value may be understood as

$$\sqrt{P_{r\max} P_{r\min}}$$

.

According to at least one embodiment of this application, step 202 includes:

configuring, by the first device, the transmit beam pointing and the receive beam pointing at the second moment according to a first angle of the first target relative to a transmit end device and a second angle of the first target relative to a receive end device; and

determining, by the first device, a lower limit of a transmit end antenna aperture and a lower limit of a receive end antenna aperture according to an antenna aperture of a resolution requirement in a sensing requirement, and the determined transmit beam pointing and the determined receive beam pointing at the second moment. Optionally, the lower limit of the antenna aperture at least needs to meet settings of the antenna aperture of the resolution requirement in the sensing requirement; and

the first device configures the signal transmit power, the transmit end aperture gain, and the receive end aperture gain at the second moment according to the lower limit of the transmit end antenna aperture, the lower limit of the receive end antenna aperture, the transmit beam pointing, and the receive beam pointing, to meet the first value of the first parameter.

In an optional embodiment, the configuring, by the first device, the transmit beam pointing and the receive beam pointing according to a first angle of the first target relative to a transmit end device and a second angle of the first target relative to a receive end device includes:

configuring, by the first device, the transmit beam pointing as the first angle, and configuring the receive beam pointing as the second angle, where

the first angle is an angle of the first target at the first moment relative to the transmit end device or an angle predicted value of the first target at the second moment relative to the transmit end device; and

the second angle is an angle of the first target at the first moment relative to the receive end device or an angle predicted value of the first target at the second moment relative to the receive end device.

Optionally, if the first value of the first parameter is determined based on the echo signal quality at the first moment, the first angle is an angle of the first target at the first moment relative to the transmit end device, and the second angle is an angle of the first target at the first moment relative to the receive end device.

If the first value of the first parameter is determined based on the predicted distance value at the second moment, the first angle is an angle predicted value of the first target at the second moment relative to the transmit end device, and the second angle is an angle predicted value of the first target at the second moment relative to the receive end device. The angle prediction method is content implemented by a device. This is not limited herein.

In at least one embodiment of this application, the resolution requirement in the sensing requirement includes: an angle measurement resolution requirement and/or a radar imaging lateral resolution requirement.

Angle measurement resolution: It is a minimum angle between two targets that can be distinguished through radar detection, and may be measured in degrees or radians.

Lateral resolution: It is a minimum distance between two targets that can be distinguished through radar imaging in a direction perpendicular to the line of sight, and may be measured in meters. For an antenna array with a beam forming capability, the quantity of antenna array elements and the arrangement of array elements determine a beam width, which further determines the angle measurement resolution. For a uniform antenna array, an angle measurement resolution n in an azimuth direction or a pitch direction may be expressed as follows:

$$\Delta\theta = \frac{k\lambda}{D\cos\theta}$$

$D$ represents an antenna aperture in the azimuth direction or the pitch direction, $\lambda$ represents a wavelength, $\theta$ represents a beam direction, and $k$ represents a beam width factor. For the bistatic radar, the angle measurement resolution is determined by the receive end device. The aperture $D$ includes two cases below.

Case A: For a dense antenna array, D=Nd, where N is a quantity of antenna array elements in the azimuth direction or the pitch direction, and d is a spacing between antenna array elements.

Case B: For a sparse antenna array, D depends on a spacing between array elements at two ends in the azimuth direction or the pitch direction.

When spacings between array elements at two ends of the antenna are the same, in Case A and Case B, beam widths are the same, but antenna gains are different (due to different quantities of antenna array elements).

An antenna aperture adaptation method is described using 64 antennas of NR as an example. Considering that the 64 antennas are arranged in an 8×8 array in hardware, apertures in the azimuth direction may be set to include 1 to 8 antenna array element widths, and apertures in the pitch direction may be set to include 1 to 8 antenna array element widths.

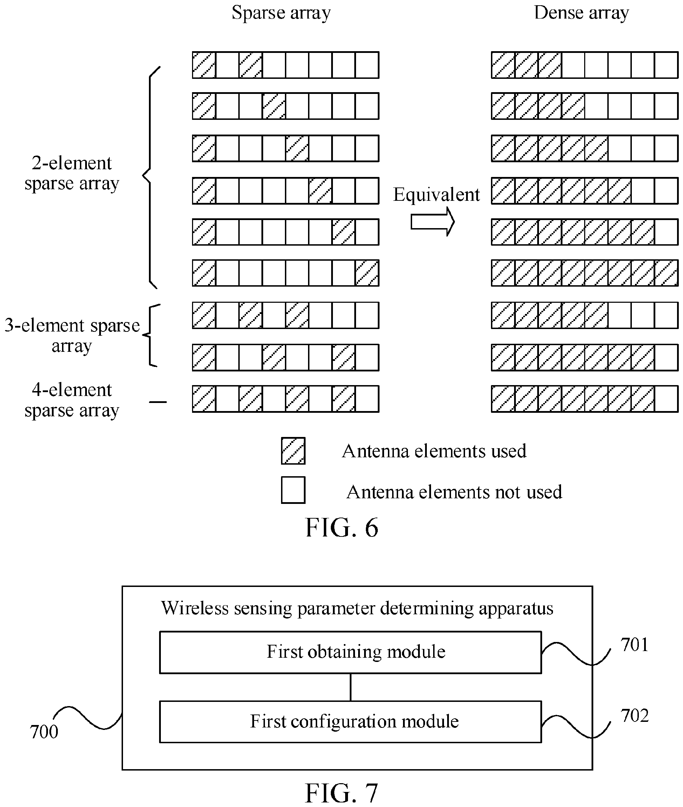

In a scenario in which apertures in the azimuth direction or the pitch direction include 2 to 4 antenna array element widths, two cases, namely, a dense array and a sparse array, are further included, and there is an equivalent relationship in the angle measurement resolution, as shown in FIG. 6.

2-element sparse array: According to different spacings between the array elements, when the two array elements are separated by 2 to 7 array elements, the array may be respectively equivalent to a dense array of 3 to 8 array elements.

3-element sparse array: According to different spacings between the array elements, when every two adjacent array elements are separated by 2 array elements, the array may be equivalent to a 5-element dense array; and when every two adjacent array elements are separated by 3 array elements, the array may be equivalent to a 7-element dense array.

4-element sparse array: When every two adjacent array elements are separated by 2 array elements, the array may be equivalent to a 7-element dense array.

In at least one embodiment of this application, the determining, by the first device, a lower limit of a transmit end antenna aperture and a lower limit of a receive end antenna aperture according to an antenna aperture of a resolution requirement in a sensing requirement, and the determined transmit beam pointing and the determined receive beam pointing at the second moment includes:

in a non-radar imaging scenario, determining, by the first device, the lower limit of the transmit end antenna aperture and the lower limit of the receive end antenna aperture according to the antenna aperture of the angle measurement resolution requirement, and the determined transmit beam pointing and the determined receive beam pointing at the second moment.

The angle measurement resolution in the azimuth direction or the pitch direction may be set in 8 levels, as shown in Table 1:

| Aperture D | Angle measurement resolution | Aperture settings | |
|---|---|---|---|
| | | Dense array | Sparse array |
| d | $1 \times k\lambda/(d\cos\theta)$ | Option 1: 1 array element | - |
| 2d | $1/2 \times k\lambda/(d\cos\theta)$ | Option 2: 2 array element | - |

(continued)

| Aperture D | Angle measurement resolution | Aperture settings | |
| --- | --- | --- | --- |
| | | Dense array | Sparse array |
| 3d | $1/3 \times k\lambda/(d\cos\theta)$ | Option 3a: 3 array elements | Option 3b: 2-element sparse array (separated by 2 array elements) |
| 4d | $1/4 \times k\lambda/(d\cos\theta)$ | Option 4a: 4 array elements | Option 4b: 2-element sparse array (separated by 3 array elements) |
| 5d | $1/5 \times k\lambda/(d\cos\theta)$ | Option 5a: 5 array elements | Option 5b: 2-element sparse array (separated by 4 array elements) Option 5c: 3-element sparse array (separated by 2 array elements) |
| 6d | $1/6 \times k\lambda/(d\cos\theta)$ | Option 6a: 6 array elements | Option 6b: 2-element dense array (separated by 5 array elements) |
| 7d | $1/7 \times k\lambda/(d\cos\theta)$ | Option 7a: 7 array elements | Option 7b: 2-element sparse array (spaced by 6 array elements) Option 7c: 3-element sparse array (spaced by 3 array elements) Option 7d: 4-element sparse array (separated by 2 array elements) |
| 8d | $1/8 \times k\lambda/(d\cos\theta)$ | Option 8a: 8 array elements | Option 8b: 2-element sparse array (separated by 7 array elements) |
| Table 1 Table of a correspondence between an angle measurement resolution and aperture settings | | | |

According to the table, in a case that antennas are arranged in an 8×8 array in hardware, there are 17 options for aperture settings in the azimuth direction or the pitch direction. 4 bits may be used for setting.

In addition, for an aperture setting, when antenna array element hardware is selected, 3 bits may be used to represent an aperture offset in the azimuth direction, and 3 bits may be used to represent an aperture offset in the pitch direction. The aperture offset represents an offset value of a set aperture relative to one end of an antenna array in the azimuth direction or the pitch direction. The aperture offset value is shown in Table 2:

| Option | Aperture offset value |
| --- | --- |
| Option 1 | 0,1,2,3,4,5,6,7 |
| Option 2 | 0,1,2,3,4,5,6 |
| Option 3a/3b | 0,1,2,3,4,5 |
| Option 4a/4b | 0,1,2,3,4 |
| Option 5a/5b/5c | 0,1,2,3 |
| Option 6a/6b | 0,1,2 |
| Option 7a/7b/7c/7d | 0,1 |
| Option 8a/8b | 0 |
| Table 2 Optional aperture offsets for aperture settings | |

Therefore, for both the azimuth direction and the pitch direction, a total of 14 bits may be used to transmit aperture configuration information, as shown in Table 3:

Table 3 Transmission encoding on aperture settings and aperture offsets

| Aperture settings in the azimuth direction | Aperture offset in the azimuth direction | Aperture settings in the pitch direction | Aperture offset in the pitch direction |
| --- | --- | --- | --- |
| bit0 to bit3 | bit4 to bi6 | bit7 to bit10 | bit11 to bit13 |

Alternatively, the aperture settings and the aperture offsets may also be combined for encoding configuration, to reduce a quantity of bits occupied by the aperture configuration information. For example, the option 1 has 1 aperture setting, and 8 aperture offsets have a total of 8 cases; the option 2 has 1 aperture setting, and 7 aperture offsets have a total of 7 cases; the option 3 has 2 aperture settings, and 6 aperture offsets have a total of 12 cases; the option 4 has 2 aperture settings, and 5 aperture offsets have a total of 10 cases, the option 5 has 3 aperture settings, and 4 aperture offsets have a total of 12 cases, the option 6 has 2 aperture settings, and 3 aperture offsets have a total of 6 cases; the option 7 has 4 aperture settings, and 2 aperture offsets have a total of 8 cases; and the option 8 has 2 aperture settings, and 1 aperture offset has a total of 2 cases. Therefore, there are 65 cases in total, and 7 bits may be used to transmit the aperture configuration information.

Alternatively, for a radar imaging scenario, the determining, by the first device, a lower limit of a transmit end antenna aperture and a lower limit of a receive end antenna aperture according to an antenna aperture of a resolution requirement in a sensing requirement, and the determined transmit beam pointing and the determined receive beam pointing at the second moment includes:

determining, by the first device, the lower limit of the transmit end antenna aperture and the lower limit of the receive end antenna aperture according to the antenna aperture of the radar imaging lateral resolution requirement, the transmit beam pointing at the second moment, the receive beam pointing at the second moment, a first distance of the first target relative to the transmit end device, and a second distance of the first target relative to the receive end device.

In the radar imaging scenarios, in an application such as radar imaging or three-dimensional reconstruction, as a sensing target or a detection device moves, a relative distance between the detection device and the sensing target changes. In addition, when the target is far away from a normal direction of the antenna, a beam broadening effect may also reduce the angle measurement resolution. To maintain a horizontal distance resolution of imaging, the angle measurement resolution needs to be adaptively adjusted according to changes in the distance to the target, that is, the antenna aperture is adjusted.

If a distance between a sensing node and the target becomes larger, and/or the target deviates from the normal direction of the antenna of the sensing node, the angle measurement resolution needs to be increased (where a value of the angle measurement resolution is reduced), that is, the antenna aperture is increased, to maintain the horizontal distance resolution of radar imaging.

If the distance between the sensing node and the target becomes smaller, and/or the target is close to the normal direction of the antenna of the sensing node, the angle measurement resolution may be reduced (where the value of the angle measurement resolution is increased), that is, the antenna aperture is reduced, to release some antenna resources.

Adjustment on the antenna aperture includes:

adjusting the quantity of antenna array elements; in a case of the dense array, adjusting the quantity of antenna array elements, that is, adjusting a corresponding antenna aperture;
adjusting the spacing between the antenna array elements; and based on the equivalent relationship between the sparse antenna array and the dense antenna array, adjusting the spacing between the antenna array elements, to adjust the antenna aperture.

Link adaptive adjustment on the antenna aperture may be performed in segments based on a relative distance R between a target and a radar, and a target angle (a beam direction) θ in combination with a hardware configuration of the antenna array. For each segment, the following relationship should be met:

$$\frac{k\lambda}{D\cos\theta} \le \frac{\Delta L_{cross}}{R}$$

D represents an antenna aperture in the azimuth direction or the pitch direction, $\lambda$ represents a wavelength, $\theta$ represents a beam direction, and k represents a beam width factor, and R represents the relative distance between the target and the radar; and $\Delta L_{cross}$ represents the radar imaging lateral resolution requirement.

The $8\times8$ antenna array is still used as an example, link adaptation is set according to the target distance and an angle segmented aperture, as shown in Table 4:

Table 4 Table of a correspondence between a distance, an angle segmentation, and aperture settings

| Relative distance R segment | Aperture D settings |
|---|---|
| $\dfrac{R}{\cos\theta} \le \dfrac{\Delta L_{cross}d}{k\lambda}$ | Option 1 |
| $\dfrac{\Delta L_{cross}d}{k\lambda} < \dfrac{R}{\cos\theta} \le \dfrac{2\Delta L_{cross}d}{k\lambda}$ | Option 2 |
| $\dfrac{2\Delta L_{cross}d}{k\lambda} < \dfrac{R}{\cos\theta} \le \dfrac{3\Delta L_{cross}d}{k\lambda}$ | Option 3a/3b |
| $\dfrac{3\Delta L_{cross}d}{k\lambda} < \dfrac{R}{\cos\theta} \le \dfrac{4\Delta L_{cross}d}{k\lambda}$ | Option 4a/4b |
| $\dfrac{4\Delta L_{cross}d}{k\lambda} < \dfrac{R}{\cos\theta} \le \dfrac{5\Delta L_{cross}d}{k\lambda}$ | Option 5a/5b/5c |
| $\dfrac{5\Delta L_{cross}d}{k\lambda} < \dfrac{R}{\cos\theta} \le \dfrac{6\Delta L_{cross}d}{k\lambda}$ | Option 6a/6b |
| $\dfrac{6\Delta L_{cross}d}{k\lambda} < \dfrac{R}{\cos\theta} \le \dfrac{7\Delta L_{cross}d}{k\lambda}$ | Option 7a/7b/7c/7d |
| $\dfrac{R}{\cos\theta} > \dfrac{7\Delta L_{cross}d}{k\lambda}$ | Option 8a/8b |

In an optional embodiment, the configuring, by the first device, the signal transmit power, the transmit end aperture gain, and the receive end aperture gain according to the lower limit of the transmit end antenna aperture, the lower limit of the receive end antenna aperture, the transmit beam pointing, and the receive beam pointing, to meet the first value of the first parameter includes:

configuring, by the first device, the signal transmit power, the transmit end aperture gain, and the receive end aperture gain according to the first value of the first parameter, the lower limit of the transmit end antenna aperture, the lower limit of the receive end antenna aperture, the transmit beam pointing, the receive beam pointing, capability information of the transmit end device, and capability information of the receive end device, where the capability information includes a currently available transmit power configuration of a corresponding device and an information set configured by an antenna array.

In the foregoing steps, the beam direction in the first parameter is obtained. Further, it is necessary to set the transmit power and the aperture gain in the first parameter, or a product of the transmit power and the aperture gain (that is, a power aperture product). In other words, the configuring the signal transmit power, the transmit end aperture gain, and the receive end aperture gain at the second moment includes:

configuring, by the first device, the signal transmit power, the transmit end aperture gain, and the receive end aperture gain in a power priority manner or an aperture priority manner, where the power priority manner includes: preferentially configuring the signal transmit power to meet a requirement of the first parameter, and if the signal transmit power reaches a configured power interval upper limit and the requirement of the first parameter is still not met, configuring the transmit end aperture gain and/or the receive end aperture gain to meet the requirement of the first parameter; and the aperture priority manner includes: preferentially configuring the transmit end aperture gain and/or the receive end aperture gain to meet the requirement of the first parameter, and if the transmit end aperture gain and/or the receive end aperture gain reaches an aperture gain upper limit and the requirement of the first parameter is still not met, configuring the signal transmit power to meet the requirement of the first parameter.

It is to be noted that, according to resource occupancy of the sensing node and/or an indication of the sensing function network element, the first device determines to configure the signal transmit power, the transmit end aperture gain, and the receive end aperture gain by using the power priority manner or the aperture priority manner.

For the bistatic radar, a manner for configuring the transmit end aperture gain and/or the receive end aperture gain includes: prioritizing the transmit end aperture gain or prioritizing the receive end aperture gain, where

the prioritizing the transmit end aperture gain includes: preferentially configuring the transmit end aperture gain, and if the transmit end aperture gain reaches an upper limit of the transmit end aperture gain and the requirement of the first parameter is still not met, configuring the receive end aperture gain to meet the requirement of the first parameter; and

the prioritizing the receive end aperture gain includes: preferentially configuring the receive end aperture gain, and if the receive end aperture gain reaches an upper limit of the receive end aperture gain and the requirement of the first parameter is still not met, configuring the transmit end aperture gain to meet the requirement of the first parameter.

Optionally, according to the resource occupancy and/or the indication of the sensing function network element, the first device determines to configure the aperture gain in a transmit end aperture gain priority manner or in a receive end aperture gain priority manner.

For example, for the monostatic radar, configuration priorities of the transmit power and the aperture gain are sorted in descending order:

(1) the transmit power and the aperture gain; or
(2) the aperture gain and the transmit power.

In another example, for the bistatic radar, the aperture gain is classified into the transmit end aperture gain and the receive end aperture gain, and configuration priorities are sorted in descending order:

(1) the transmit power, the transmit end aperture gain, and the receive end aperture gain;
(2) the transmit power, the receive end aperture gain, and the transmit end aperture gain;
(3) the transmit end aperture gain, the transmit power, and the receive end aperture gain;
(4) the transmit end aperture gain, the receive end aperture gain, and the transmit power;
(5) the receive end aperture gain, the transmit power, and the transmit end aperture gain; or
(6) the receive end aperture gain, the transmit end aperture gain, and the transmit power.

A lower limit of the aperture gain is an aperture gain corresponding to the lower limit of the antenna aperture set in the previous step, and an upper limit of the aperture gain includes at least one of the following:

aperture gains corresponding to all array elements an antenna array hardware configuration; and
an aperture gain corresponding to a maximum aperture assigned to a radar detection task when multi-tasks are performed in parallel.

The lower limit of the transmit power is minimum power required by the communication function, and the maximum transmit power includes at least one of the following:

maximum transmit power specified in relevant technical specifications;
maximum transmit power that meets relevant energy-saving requirements; and
maximum transmit power assigned to a radar detection task when multi-tasks are performed in parallel.

Optionally, the transmit power may be set in a continuous setting manner, that is, any value within a preconfigured power interval may be set to the value of the transmit power. Alternatively, the transmit power may be set in a step setting manner, that is, a corresponding transmit power is set at a step interval within a preconfigured power interval.

A method for increasing the aperture gain is to increase a quantity of occupied antenna array elements, including the following two steps:

1) in a case of the dense array: increasing the antenna aperture, where in this case, the quantity of antenna array elements is increased; and

2) in a case of the sparse array, there are two cases:

a) in a case that the antenna aperture remains unchanged, reducing the spacing between the array elements, for example, adjusting from the option 5b in Table 1 or Table 2 or Table 4 to the option 5c or the option 5a, where in this case, the antenna aperture remains unchanged, but the quantity of antenna array elements is increased; and

b) if the antenna aperture changes, for example, adjusting the option 3b in Table 1 or Table 2 or Table 4 to the option 5b, where in this case, the spacing between the array elements remains unchanged, and the quantity of array elements is increased.

Based on the above, in the embodiments of this application, the first device configures the signal transmit power, the transmit end aperture gain, the receive end aperture gain, the transmit beam pointing, and the receive beam pointing corresponding to the first target according to the first value of the first parameter corresponding to the first target, so that resource configuration can be optimized in a case that a sensing requirement is met, thereby optimizing performance of an integrated sensing and communication system and the user of the power resource.

To describe the wireless sensing parameter determining method provided in the embodiments of this application more clearly, descriptions are made below by using two examples.

Example 1: Joint adaption on multi-parameters in the monostatic radar

1. A transmit end device sends a first signal and receives a target reflected echo of the first signal, to obtain target echo data.

2. After the transmit end device obtains the target echo data, radar signal processing on the target echo data includes one of the following three cases:

1) performing, by the transmit end device, radar signal processing on the target echo data, to obtain a sensing result;

2) sending, by the transmit end device, the target echo data to the sensing function network element, and performing, by the sensing function network element, radar signal processing to obtain a sensing result; and

3) performing, by the transmit end device, a part of an operation of radar signal processing, sending an operation result to the sensing function network element, and performing, by the sensing function network element, a remaining part of the operation of radar signal processing, to obtain a sensing result.

3. The transmit end device or the sensing function network element performs the joint adaptation method of transmit power, an antenna aperture, and a beam direction in the embodiments of this application according to the sensing result, to obtain transmit power, an aperture gain, and a beam direction at a next moment.

4. The transmit end device sets the transmit power, the aperture gain, and the beam direction at the next moment; and If the sensing function network element performs the joint adaptation method of transmit power, an antenna aperture, and a beam direction, before the transmit end device generates the first signal at the next moment, the method further includes a step of receiving, by the transmit end device, the transmit power, the aperture gain, and the beam direction at the next moment from the sensing function network element.

5. The foregoing steps are repeatedly performed until a sensing process ends.

Example 2: Joint adaption on multi-parameters in the bistatic radar

1. A transmit end device sends a first signal, and a receive end device receives a target reflected echo of the first signal, to obtain target echo data.

2. After the receive end device obtains the target echo data, radar signal processing on the target echo data includes one of the following three cases:

1) performing, by the receive end device, radar signal processing on the target echo data, to obtain a sensing result;

2) sending, by the receive end device, the target echo data to the sensing function network element, and performing, by the sensing function network element, radar signal processing to obtain a sensing result; and
3) performing, by the receive end device, a part of an operation of radar signal processing, sending an operation result to the sensing function network element, and performing, by the sensing function network element, a remaining part of the operation of radar signal processing, to obtain a sensing result.

3. The receive end device or the sensing function network element performs the joint adaptation method of transmit power, an antenna aperture, and a beam direction in the embodiments of this application according to the sensing result, to obtain transmit power, a transmit end aperture gain, a receive end aperture gain, a transmit beam pointing, and a receive beam pointing at a next moment.

4. The transmit end device sets the transmit power, the transmit end aperture gain, and the transmit beam pointing at the next moment, and the receive end device sets the receive end aperture gain and the receive beam pointing at the next moment. Before this step, information exchange between the sensing function network element, the transmit end device, and the receive end device is further included. The content of information exchange is the transmit power, the transmit end aperture gain, the receive end aperture gain, the transmit beam pointing, and the receive beam pointing at the next moment

5. Steps 2 to 6 are repeatedly performed until a sensing process ends.

An execution entity of the wireless sensing parameter determining method provided in the embodiments of this application may be a wireless sensing parameter determining apparatus. The wireless sensing parameter determining apparatus provided in the embodiments of this application is described in the embodiments of this application by using an example in which the wireless sensing parameter determining apparatus performs the wireless sensing parameter determining method.

Refer to FIG. 7. FIG. 7 is a schematic diagram of a structure of a wireless sensing parameter determining apparatus 700 according to an embodiment of this application. The apparatus is used in a first device and includes:

a first obtaining module 701, configured to obtain a first value of a first parameter corresponding to a first target, where the first device or a second device detects an echo signal of a signal sent at a first moment, to determine the first target; and

a first configuration module 702, configured to configure a signal parameter of the first target according to the first value of the first parameter, where the signal parameter of the first target is used for indicating signal transmission and echo signal reception at a second moment; and the signal parameter includes: signal transmit power, a transmit end aperture gain, a receive end aperture gain, a transmit beam pointing, and a receive beam pointing, where the second moment is later than the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing.

In an optional embodiment, the first obtaining module includes:

a first obtaining submodule, configured to the first value of the first parameter corresponding to the first target; or

a second obtaining submodule, configured to obtain the first value of the first parameter corresponding to the first target according to first parameter adjustment information sent by the second device, where the first parameter adjustment information includes any one of the following:

the first value of the first parameter;
a ratio of the first value of the first parameter to a second value of the first parameter; and
a difference between the first value of the first parameter and the second value of the first parameter, where the second value of the first parameter is determined based on a signal parameter corresponding to signal transmission and a signal parameter corresponding to echo signal reception at the first moment.

In an optional embodiment, in a case that the first device is a transmit end device, the apparatus further includes:
a first sending module, configured to send, to a receive end device, the receive end aperture gain and the receive beam pointing that indicate echo signal reception at the second moment;

In an optional embodiment, in a case that the first device is a receive end device, the apparatus further includes:
a second sending module, configured to send, to a transmit end device, the signal transmit power, the transmit end aperture gain, and the transmit beam pointing that indicate the signal transmission at the second moment;

In an optional embodiment, in a case that the first device is a sensing function network element, the apparatus further includes:

a third sending module, configured to send, to a transmit end device, the signal transmit power, the transmit end aperture gain, and the transmit beam pointing that indicate the signal transmission at the second moment, and send, to a receive end device, the receive end aperture gain and the receive beam pointing that indicate echo signal reception at the second moment.

In an optional embodiment, in a case that the first device is a transmit end device, the apparatus further includes: a fourth sending module, configured to send the signal according to the signal transmit power, the transmit end aperture gain, and the transmit beam pointing.

In an optional embodiment, in a case that the first device is a receive end device, the apparatus further includes: a receiving module, configured to receive the echo signal according to the receive end aperture gain and the receive beam pointing.

In an optional embodiment, the first obtaining submodule includes:

a first determining unit, configured to determine the first value of the first parameter according to echo signal quality of the first target at the first moment;

or

a second determining unit, configured to determine the first value of the first parameter according to a predicted distance value of the first target at the second moment and echo signal quality of the first target at the first moment.

In an optional embodiment, the echo signal quality of the first target includes at least one of the following:

power of the echo signal of the first target;
a signal to noise ratio of the echo signal of the first target;
a signal-to-noise plus interference ratio of the echo signal of the first target;
reference signal received power of the echo signal of the first target; and
reference signal received quality of the echo signal of the first target.

In an optional embodiment, the first determining unit includes:

a first determining subunit, configured to determine the first value of the first parameter according to the second value of the first parameter, the echo signal quality of the first target at the first moment, and first preset echo quality in a case that the echo signal quality of the first target is maintained near the first preset echo quality;

or

a second determining subunit, configured to determine the first value of the first parameter according to the second value of the first parameter, the echo signal quality of the first target at the first moment, and a first echo quality range in a case that the echo signal quality of the first target is maintained in the first echo quality range, where the second value of the first parameter is determined based on a signal parameter corresponding to signal transmission and a signal parameter corresponding to echo signal reception at the first moment.

In an optional embodiment, the first determining subunit is further configured to:

determine the first value of the first parameter based on a first formula, where the first formula is:

$$C' = \frac{P_{r0}}{P_r} C$$

$C'$ represents the first value of the first parameter; $C$ represents the second value of the first parameter; $P_{r0}$ represents the first preset echo quality; and $P_r$ represents the echo signal quality of the first target at the first moment.

In an optional embodiment, the second determining subunit is further configured to:

determine the first value of the first parameter based on a second formula, where the second formula is:

$$C' = \frac{P}{P_r} C$$

$C'$ represents the first value of the first parameter; $C$ represents the second value of the first parameter; and $P_r$

represents the echo signal quality of the first target at the first moment; and

in a case that $P_r$ is greater than an upper echo quality limit of the first echo quality range, P represents the upper echo quality limit of the first echo quality range; or

in a case that $P_r$ is less than a lower echo quality limit of the first echo quality range, P represents the lower echo quality limit of the first echo quality range; or

P represents an arithmetic mean value or a geometric mean value of an upper echo quality limit and a lower echo quality limit of the first echo quality range.

In an optional embodiment, the second determining unit includes:

a third determining subunit, configured to determine the first value of the first parameter according to the second value of the first parameter, the echo signal quality of the first target at the first moment, first preset echo quality, and the predicted distance value of the first target at the second moment in a case that the echo signal quality of the first target is maintained near the first preset echo quality;

or

a fourth determining subunit, configured to determine the first value of the first parameter according to the second value of the first parameter, the echo signal quality of the first target at the first moment, a first echo quality range, and the predicted distance value of the first target at the second moment in a case that the echo signal quality of the first target is maintained in the first echo quality range.

In an optional embodiment, the third determining subunit is further configured to:

determining the first value of the first parameter based on a third formula, where the third formula is:

$$C' = \left( \frac{R'}{R} \right)^4 \frac{P_{r0}}{P_r} C \quad \text{or} \quad C' = \left( \frac{R_t' R_r'}{R_t R_r} \right)^2 \frac{P_{r0}}{P_r} C ,$$

$C'$ represents the first value of the first parameter; C represents the second value of the first parameter; $P_{r0}$ represents the first preset echo quality; $P_r$ represents the echo signal quality of the first target at the first moment; R represents a distance between the first target at the first moment and a signal transceiver device in a monostatic radar scenario; $R'$ represents a predicted distance value between the first target at the second moment and the signal transceiver device in the monostatic radar scenario; $R_t$ represents a distance between the first target at the first moment and a transmit end device in a bistatic radar scenario; $R_t'$ represents a predicted distance value between the first target at the second moment and the transmit end device in the bistatic radar scenario; $R_r$ represents a distance between the first target at the first moment and a receive end device in the bistatic radar scenario; and $R_r'$ represents a predicted distance value between the first target at the second moment and the receive end device in the bistatic radar scenario.

In an optional embodiment, the fourth determining subunit is further configured to:

determine the first value of the first parameter based on a fourth formula, where the fourth formula is:

$$C' = \left( \frac{R'}{R} \right)^4 \frac{P}{P_r} C \quad \text{or} \quad C' = \left( \frac{R_t' R_r'}{R_t R_r} \right)^2 \frac{P}{P_r} C ,$$

$C'$ represents the first value of the first parameter; C represents the second value of the first parameter; $P_r$ represents the echo signal quality of the first target at the first moment; R represents a distance between the first target at the first moment and a signal transceiver device in a monostatic radar scenario; $R'$ represents a predicted distance value between the first target at the second moment and the signal transceiver device in the monostatic radar scenario; $R_t$ represents a distance between the first target at the first moment and a transmit end device in a bistatic radar scenario; $R_t'$ represents a predicted distance value between the first target at the second moment and the transmit end device in the bistatic radar scenario; $R_r$ represents a distance between the first target at the first moment and a receive end device in the bistatic radar scenario; and $R_r'$ represents a predicted distance value between the first target at the second moment and the receive end device in the bistatic radar scenario; and

in a case that $P_r$ is greater than an upper echo quality limit of the first echo quality range, P represents the upper echo quality limit of the first echo quality range; or

in a case that $P_r$ is less than a lower echo quality limit of the first echo quality range, P represents the lower echo quality limit of the first echo quality range; or

P represents an arithmetic mean value or a geometric mean value of an upper echo quality limit and a lower echo quality limit of the first echo quality range.

In an optional embodiment, the first configuration module includes:

a first configuration submodule, configured to configure the transmit beam pointing and the receive beam pointing according to a first angle of the first target relative to a transmit end device and a second angle of the first target relative to a receive end device;

a determining submodule, configured to determine a lower limit of a transmit end antenna aperture and a lower limit of a receive end antenna aperture according to an antenna aperture of a resolution requirement in a sensing requirement, and the determined transmit beam pointing and the determined receive beam pointing; and

a second configuration submodule, configured to configure the signal transmit power, the transmit end aperture gain, and the receive end aperture gain according to the lower limit of the transmit end antenna aperture, the lower limit of the receive end antenna aperture, the transmit beam pointing, and the receive beam pointing, to meet the first value of the first parameter.

In an optional embodiment, the first configuration submodule includes:

a first configuration unit, configured to configure the transmit beam pointing as the first angle, and configure the receive beam pointing as the second angle, where

the first angle is an angle of the first target at the first moment relative to the transmit end device or an angle predicted value of the first target at the second moment relative to the transmit end device; and

the second angle is an angle of the first target at the first moment relative to the receive end device or an angle predicted value of the first target at the second moment relative to the receive end device.

In an optional embodiment, the resolution requirement in the sensing requirement includes: an angle measurement resolution requirement and/or a radar imaging lateral resolution requirement.

In an optional embodiment, the determining submodule includes:

a first determining unit, configured to determine the lower limit of the transmit end antenna aperture and the lower limit of the receive end antenna aperture according to the antenna aperture of the angle measurement resolution requirement, and the determined transmit beam pointing and the determined receive beam pointing;

or

a second determining unit, configured to determine the lower limit of the transmit end antenna aperture and the lower limit of the receive end antenna aperture according to the antenna aperture of the radar imaging lateral resolution requirement, the transmit beam pointing, the receive beam pointing, a first distance of the first target relative to the transmit end device, and a second distance of the first target relative to the receive end device.

In an optional embodiment, the second configuration submodule includes:

a second configuration unit, configured to configure the signal transmit power, the transmit end aperture gain, and the receive end aperture gain according to the first value of the first parameter, the lower limit of the transmit end antenna aperture, the lower limit of the receive end antenna aperture, the transmit beam pointing, the receive beam pointing, capability information of the transmit end device, and capability information of the receive end device, where the capability information includes a currently available transmit power configuration of a corresponding device and an information set configured by an antenna array.

In an optional embodiment, the second configuration unit includes:

a configuration subunit, configured to configure the signal transmit power, the transmit end aperture gain, and the receive end aperture gain at the second moment in a power priority manner or an aperture priority manner, where the power priority manner includes: preferentially configuring the signal transmit power to meet a requirement of the first parameter, and if the signal transmit power reaches a configured power interval upper limit and the requirement of the first parameter is still not met, configuring the transmit end aperture gain and/or the receive end aperture gain to meet the requirement of the first parameter; and

the aperture priority manner includes: preferentially configuring the transmit end aperture gain and/or the receive end aperture gain to meet the requirement of the first parameter, and if the transmit end aperture gain and/or the receive end aperture gain reaches an aperture gain upper limit and the requirement of the first parameter is still not met, configuring the signal transmit power to meet the requirement of the first parameter.

In an optional embodiment, a manner for configuring the transmit end aperture gain and/or the receive end aperture gain includes: prioritizing the transmit end aperture gain or prioritizing the receive end aperture gain, where

the prioritizing the transmit end aperture gain includes: preferentially configuring the transmit end aperture gain, and if the transmit end aperture gain reaches an upper limit of the transmit end aperture gain and the requirement of the first parameter is still not met, configuring the receive end aperture gain to meet the requirement of the first parameter; and

the prioritizing the receive end aperture gain includes: preferentially configuring the receive end aperture gain, and if the receive end aperture gain reaches an upper limit of the receive end aperture gain and the requirement of the first parameter is still not met, configuring the transmit end aperture gain to meet the requirement of the first parameter.

In the embodiments of this application, the first device configures the signal transmit power, the transmit end aperture gain, the receive end aperture gain, the transmit beam pointing, and the receive beam pointing corresponding to the first target according to the first value of the first parameter, so that resource configuration can be optimized in a case that a sensing requirement is met, thereby optimizing performance of an integrated sensing and communication system and the user of the power resource.

It is to be noted that, the wireless sensing parameter determining apparatus provided in the embodiments of this application is an apparatus that can perform the wireless sensing parameter determining method, and all embodiments of the wireless sensing parameter determining method are applicable to the terminal and can achieve the same or similar beneficial effects.

The wireless sensing parameter determining apparatus in this embodiment of this application may be an electronic device, for example, an electronic device with an operating system, or may be a component in an electronic device, for example, an integrated circuit or a chip. The electronic device may be a terminal, or may be another device other than a terminal. For example, the terminal may include but is not limited to a type of the terminal 11 listed above, and the another device may be a server, a network attached storage (network attached storage, NAS), or the like. This is not specifically limited in the embodiments of this application.

The wireless sensing parameter determining apparatus provided in the embodiments of this application can implement the processes implemented in the method embodiment of FIG. 1 to FIG. 6 and achieve the same technical effect. To avoid repetition, details are not described herein again.

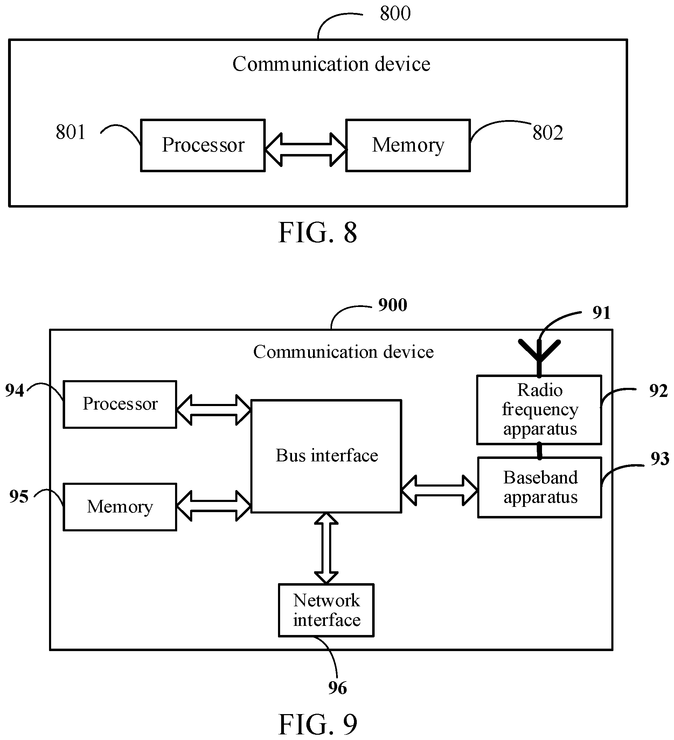

Optionally, as shown in FIG. 8, an embodiment of this application further provides a communication device 800, including a processor 801 and a memory 802, the memory 802 storing a program or instructions runnable on the processor 801, the program or instructions, when executed by the processor 801, implementing the steps of the embodiments of the wireless sensing parameter determining method, and achieving the same technical effect. To avoid repetition, details are not described herein again.

An embodiment of this application further provides a communication device, including a processor and a communication interface. The processor is configured to: obtain a first value of a first parameter corresponding to a first target, where the first device or a second device detects an echo signal of a signal sent at a first moment, to determine the first target; and configure a signal parameter of the first target according to the first value of the first parameter, where the signal parameter of the first target is used for indicating signal transmission and echo signal reception at a second moment; and the signal parameter includes: signal transmit power, a transmit end aperture gain, a receive end aperture gain, a transmit beam pointing, and a receive beam pointing, where the second moment is later than the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing. The embodiment of the communication device corresponds to the method embodiments of the first device. All implementation processes and implementations of the method embodiment are applicable to this embodiment of the communication device and can achieve the same technical effects.

Specifically, an embodiment of this application further provides a network side device. As shown in FIG. 9, the network side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-processed information, and sends the information to the radio frequency apparatus 92. The radio frequency apparatus 92 processes received information and sends the information by using the antenna 91.

In the foregoing embodiments, the method performed by the network side device may be implemented in the baseband apparatus 93. The baseband apparatus 93 includes a baseband processor.

The baseband apparatus 93 may include, for example, at least one baseband plate. A plurality of chips are arranged on the baseband plate. As shown in FIG. 9, one of the plurality of chips is, for example, the baseband processor, and is connected to the memory 95 through a bus interface, to invoke a program in the memory 95 to perform operations performed by the network side device in the foregoing method embodiment.

The network side device may further include a network interface 96. The interface is, for example, a common public radio interface (common public radio interface, CPRI).

Specifically, the network side device 900 in this embodiment of this application further includes: instructions or a program stored in the memory 95 and executable on the processor 94, and the processor 94 invokes the instructions or program in the memory 95 to perform the method performed by the modules shown in FIG. 7, and can achieve the same technical effect. To avoid repetition, details are not described herein again.

An embodiment of this application further provides a readable storage medium, storing a program or instructions, the program or instructions, when executed by a processor, implementing the processes of the embodiments of the wireless sensing parameter determining method, and achieving the same technical effect. To avoid repetition, details are not described herein again.

The processor is a processor in the terminal in the foregoing embodiments. The readable storage medium includes a computer-readable storage medium, for example, a read-only memory (read-only memory, ROM), a random access memory (random access memory, RAM), a magnetic disk, an optical disk, or the like.

An embodiment of this application further provides a chip, including a processor and a communication interface coupled to each other, the processor being configured to run a program or instructions to implement the processes of the embodiments of the wireless sensing parameter determining method, and can achieve the same technical effects. To avoid repetition, details are not described herein again.

It may be understood that, the chip mentioned in this embodiment of this application may also be referred to as a system-level chip, a system chip, a chip system, a system on chip, or the like.

An embodiment of this application further provides a computer program product, where the computer program product is stored in a readable storage medium, and the computer program product is configured to be executed by at least one processor to implement the processes of the embodiments of the wireless sensing parameter determining method, and can achieve the same technical effects. To avoid repetition, details are not described herein again.

It is to be noted that, the term such as "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Unless otherwise specified, elements defined by the sentence "including one" does not exclude that there are still other same elements in the processes, methods, objects, or apparatuses. In addition, it is to be noted that, the scope of the method and the apparatus in the embodiments of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may also be combined in other examples.

According to the descriptions of the foregoing embodiments, a person skilled in the art may clearly understand that the method according to the foregoing embodiments may be implemented using software and a necessary general hardware platform, and certainly, may alternatively be implemented by hardware, but in many cases, the former manner is a better implementation. Based on such an understanding, the technical solutions of this application essentially or the part contributing to the related art may be implemented in the form of a computer software product. The computer software product is stored in a storage medium (such as a read-only memory (ROM)/random access memory (RAM), a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the spirit of this application and the scope claimed by the claims, which are all under the protection of this application.

**Claims**

1. A wireless sensing parameter determining method, comprising:

   obtaining, by a first device, a first value of a first parameter corresponding to a first target, wherein the first device or a second device detects an echo signal of a signal sent at a first moment, to determine the first target; and configuring, by the first device, a signal parameter of the first target according to the first value of the first parameter, wherein the signal parameter of the first target is used for indicating signal transmission and echo signal reception at a second moment; and the signal parameter comprises: signal transmit power, a transmit end aperture gain, a receive end aperture gain, a transmit beam pointing, and a receive beam pointing, wherein the second moment is later than the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing.

2. The method according to claim 1, wherein the obtaining, by a first device, a first value of a first parameter corresponding to a first target comprises:

   determining, by the first device, the first value of the first parameter corresponding to the first target; or
   obtaining, by the first device, the first value of the first parameter corresponding to the first target according to first parameter adjustment information sent by the second device, wherein the first parameter adjustment information comprises any one of the following:

   the first value of the first parameter;
   a ratio of the first value of the first parameter to a second value of the first parameter; and
   a difference between the first value of the first parameter and the second value of the first parameter, wherein the second value of the first parameter is determined based on a signal parameter corresponding to signal transmission and a signal parameter corresponding to echo signal reception at the first moment.

3. The method according to claim 1 or 2, wherein in a case that the first device is a transmit end device, the method further comprises:
   sending, by the transmit end device to a receive end device, the receive end aperture gain and the receive beam pointing that indicate the echo signal reception at the second moment.

4. The method according to claim 1 or 2, wherein in a case that the first device is a receive end device, the method further comprises:
   sending, by the receive end device to a transmit end device, the signal transmit power, the transmit end aperture gain, and the transmit beam pointing that indicate the signal transmission at the second moment.

5. The method according to claim 1 or 2, wherein in a case that the first device is a sensing function network element, the method further comprises:
   sending, by the sensing function network element to a transmit end device, the signal transmit power, the transmit end aperture gain, and the transmit beam pointing that indicate the signal transmission at the second moment, and sending, to a receive end device, the receive end aperture gain and the receive beam pointing that indicate the echo signal reception at the second moment.

6. The method according to claim 1, wherein in a case that the first device is a transmit end device, the method further comprises:
   sending, by the transmit end device, the signal according to the signal transmit power, the transmit end aperture gain, and the transmit beam pointing.

7. The method according to claim 1, wherein in a case that the first device is a receive end device, the method further comprises:
   receiving, by the receive end device, the echo signal according to the receive end aperture gain and the receive beam pointing.

8. The method according to claim 2, wherein the determining, by the first device, the first value of the first parameter corresponding to the first target comprises:

determining, by the first device, the first value of the first parameter according to echo signal quality of the first target at the first moment;
or
determining, by the first device, the first value of the first parameter according to a predicted distance value of the first target at the second moment and echo signal quality of the first target at the first moment.

9. The method according to claim 8, wherein the echo signal quality of the first target comprises at least one of the following:

power of the echo signal of the first target;
a signal to noise ratio of the echo signal of the first target;
a signal-to-noise plus interference ratio of the echo signal of the first target;
reference signal received power of the echo signal of the first target; and
reference signal received quality of the echo signal of the first target.

10. The method according to claim 8, wherein the determining, by the first device, the first value of the first parameter according to echo signal quality of the first target at the first moment comprises:

determining the first value of the first parameter according to the second value of the first parameter, the echo signal quality of the first target at the first moment, and first preset echo quality in a case that the echo signal quality of the first target is maintained near the first preset echo quality;
or
determining the first value of the first parameter according to the second value of the first parameter, the echo signal quality of the first target at the first moment, and a first echo quality range in a case that the echo signal quality of the first target is maintained in the first echo quality range, wherein
the second value of the first parameter is determined based on a signal parameter corresponding to signal transmission and a signal parameter corresponding to echo signal reception at the first moment.

11. The method according to claim 10, wherein the determining the first value of the first parameter according to the second value of the first parameter, the echo signal quality of the first target at the first moment, and first preset echo quality comprises:

determining the first value of the first parameter based on a first formula, wherein the first formula is:

$$C' = \frac{P_{r0}}{P_r} C$$

wherein $C'$ represents the first value of the first parameter; C represents the second value of the first parameter; $P_{r0}$ represents the first preset echo quality; and $P_r$ represents the echo signal quality of the first target at the first moment.

12. The method according to claim 10, wherein the determining the first value of the first parameter according to the second value of the first parameter, the echo signal quality of the first target at the first moment, and a first echo quality range comprises:

determining the first value of the first parameter based on a second formula, wherein the second formula is:

$$C' = \frac{P}{P_r} C$$

wherein $C'$ represents the first value of the first parameter; C represents the second value of the first parameter;

and $P_r$ represents the echo signal quality of the first target at the first moment; and
in a case that $P_r$ is greater than an upper echo quality limit of the first echo quality range, P represents the upper echo quality limit of the first echo quality range; or
in a case that $P_r$ is less than a lower echo quality limit of the first echo quality range, P represents the lower echo quality limit of the first echo quality range; or
P represents an arithmetic mean value or a geometric mean value of an upper echo quality limit and a lower echo quality limit of the first echo quality range.

13. The method according to claim 8, wherein the determining, by the first device, the first value of the first parameter according to a predicted distance value of the first target at the second moment and echo signal quality of the first target at the first moment comprises:

   determining the first value of the first parameter according to the second value of the first parameter, the echo signal quality of the first target at the first moment, first preset echo quality, and the predicted distance value of the first target at the second moment in a case that the echo signal quality of the first target is maintained near the first preset echo quality;
   or
   determining the first value of the first parameter according to the second value of the first parameter, the echo signal quality of the first target at the first moment, a first echo quality range, and the predicted distance value of the first target at the second moment in a case that the echo signal quality of the first target is maintained in the first echo quality range.

14. The method according to claim 13, wherein the determining the first value of the first parameter according to the second value of the first parameter, the echo signal quality of the first target at the first moment, first preset echo quality, and the predicted distance value of the first target at the second moment comprises:

   determining the first value of the first parameter based on a third formula, where the third formula is:

$$C' = \left(\frac{R'}{R}\right)^4 \frac{P_{r0}}{P_r} C \quad \text{or} \quad C' = \left(\frac{R'_t R'_r}{R_t R_r}\right)^2 \frac{P_{r0}}{P_r} C ,$$

   wherein $C'$ represents the first value of the first parameter; C represents the second value of the first parameter; $P_{r0}$ represents the first preset echo quality; $P_r$ represents the echo signal quality of the first target at the first moment; R represents a distance between the first target at the first moment and a signal transceiver device in a monostatic radar scenario; $R'$ represents a predicted distance value between the first target at the second moment and the signal transceiver device in the monostatic radar scenario; $R_t$ represents a distance between the first target at the first moment and a transmit end device in a bistatic radar scenario; $R'_t$ represents a predicted distance value between the first target at the second moment and the transmit end device in the bistatic radar scenario; $R_r$ represents a distance between the first target at the first moment and a receive end device in the bistatic radar scenario; and $R_r'$ represents a predicted distance value between the first target at the second moment and the receive end device in the bistatic radar scenario.

15. The method according to claim 13, wherein the determining the first value of the first parameter according to the second value of the first parameter, the echo signal quality of the first target at the first moment, a first echo quality range, and the predicted distance value of the first target at the second moment comprises:

   determining the first value of the first parameter based on a fourth formula, where the fourth formula is:

$$C' = \left(\frac{R'}{R}\right)^4 \frac{P}{P_r} C \quad \text{or} \quad C' = \left(\frac{R'_t R'_r}{R_t R_r}\right)^2 \frac{P}{P_r} C ,$$

   wherein $C'$ represents the first value of the first parameter; C represents the second value of the first parameter;

$P_r$ represents the echo signal quality of the first target at the first moment; R represents a distance between the first target at the first moment and a signal transceiver device in a monostatic radar scenario; R' represents a predicted distance value between the first target at the second moment and the signal transceiver device in the monostatic radar scenario; $R_t$ represents a distance between the first target at the first moment and a transmit end device in a bistatic radar scenario; $R_t'$ represents a predicted distance value between the first target at the second moment and the transmit end device in the bistatic radar scenario; $R_r$ represents a distance between the first target at the first moment and a receive end device in the bistatic radar scenario; and $R_r'$ represents a predicted distance value between the first target at the second moment and the receive end device in the bistatic radar scenario; and

in a case that $P_r$ is greater than an upper echo quality limit of the first echo quality range, P represents the upper echo quality limit of the first echo quality range; or

in a case that $P_r$ is less than a lower echo quality limit of the first echo quality range, P represents the lower echo quality limit of the first echo quality range; or

P represents an arithmetic mean value or a geometric mean value of an upper echo quality limit and a lower echo quality limit of the first echo quality range.

16. The method according to claim 1, wherein the configuring, by the first device, a signal parameter of the first target according to the first value of the first parameter comprises:

configuring, by the first device, the transmit beam pointing and the receive beam pointing according to a first angle of the first target relative to a transmit end device and a second angle of the first target relative to a receive end device;

determining, by the first device, a lower limit of a transmit end antenna aperture and a lower limit of a receive end antenna aperture according to an antenna aperture of a resolution requirement in a sensing requirement, and the determined transmit beam pointing and the determined receive beam pointing; and

configuring, by the first device, the signal transmit power, the transmit end aperture gain, and the receive end aperture gain according to the lower limit of the transmit end antenna aperture, the lower limit of the receive end antenna aperture, the transmit beam pointing, and the receive beam pointing, to meet the first value of the first parameter.

17. The method according to claim 16, wherein the configuring, by the first device, the transmit beam pointing and the receive beam pointing according to a first angle of the first target relative to a transmit end device and a second angle of the first target relative to a receive end device comprises:

configuring, by the first device, the transmit beam pointing as the first angle, and configuring the receive beam pointing as the second angle, wherein

the first angle is an angle of the first target at the first moment relative to the transmit end device or an angle predicted value of the first target at the second moment relative to the transmit end device; and

the second angle is an angle of the first target at the first moment relative to the receive end device or an angle predicted value of the first target at the second moment relative to the receive end device.

18. The method according to claim 16, wherein the resolution requirement in the sensing requirement comprises: an angle measurement resolution requirement and/or a radar imaging lateral resolution requirement.

19. The method according to claim 18, wherein the determining, by the first device, a lower limit of a transmit end antenna aperture and a lower limit of a receive end antenna aperture according to an antenna aperture of a resolution requirement in a sensing requirement, and the determined transmit beam pointing and the determined receive beam pointing comprises:

determining, by the first device, the lower limit of the transmit end antenna aperture and the lower limit of the receive end antenna aperture according to the antenna aperture of the angle measurement resolution requirement, and the determined transmit beam pointing and the determined receive beam pointing;

or

determining, by the first device, the lower limit of the transmit end antenna aperture and the lower limit of the receive end antenna aperture according to the antenna aperture of the radar imaging lateral resolution requirement, the transmit beam pointing, the receive beam pointing, a first distance of the first target relative to the transmit end device, and a second distance of the first target relative to the receive end device.

20. The method according to claim 16, wherein the configuring, by the first device, the signal transmit power, the transmit end aperture gain, and the receive end aperture gain according to the lower limit of the transmit end antenna aperture, the lower limit of the receive end antenna aperture, the transmit beam pointing, and the receive beam pointing, to meet the first value of the first parameter comprises:

configuring, by the first device, the signal transmit power, the transmit end aperture gain, and the receive end aperture gain according to the first value of the first parameter, the lower limit of the transmit end antenna aperture, the lower limit of the receive end antenna aperture, the transmit beam pointing, the receive beam pointing, capability information of the transmit end device, and capability information of the receive end device, wherein

the capability information comprises a currently available transmit power configuration of a corresponding device and an information set configured by an antenna array.

21. The method according to claim 20, wherein the configuring the signal transmit power, the transmit end aperture gain, and the receive end aperture gain comprises:

configuring, by the first device, the signal transmit power, the transmit end aperture gain, and the receive end aperture gain in a power priority manner or an aperture priority manner, wherein

the power priority manner comprises: preferentially configuring the signal transmit power to meet a requirement of the first parameter, and if the signal transmit power reaches a configured power interval upper limit and the requirement of the first parameter is still not met, configuring the transmit end aperture gain and/or the receive end aperture gain to meet the requirement of the first parameter; and

the aperture priority manner comprises: preferentially configuring the transmit end aperture gain and/or the receive end aperture gain to meet the requirement of the first parameter, and if the transmit end aperture gain and/or the receive end aperture gain reaches an aperture gain upper limit and the requirement of the first parameter is still not met, configuring the signal transmit power to meet the requirement of the first parameter.

22. The method according to claim 21, wherein a manner for configuring the transmit end aperture gain and/or the receive end aperture gain comprises: prioritizing the transmit end aperture gain or prioritizing the receive end aperture gain, wherein

the prioritizing the transmit end aperture gain comprises: preferentially configuring the transmit end aperture gain, and if the transmit end aperture gain reaches an upper limit of the transmit end aperture gain and the requirement of the first parameter is still not met, configuring the receive end aperture gain to meet the requirement of the first parameter; and

the prioritizing the receive end aperture gain comprises: preferentially configuring the receive end aperture gain, and if the receive end aperture gain reaches an upper limit of the receive end aperture gain and the requirement of the first parameter is still not met, configuring the transmit end aperture gain to meet the requirement of the first parameter.

23. A wireless sensing parameter determining apparatus, used in a first device, the apparatus comprising:

a first obtaining module, configured to obtain a first value of a first parameter corresponding to a first target, wherein the first device or a second device detects an echo signal of a signal sent at a first moment, to determine the first target; and

a first configuration module, configured to configure a signal parameter of the first target according to the first value of the first parameter, wherein the signal parameter of the first target is used for indicating signal transmission and echo signal reception at a second moment; and the signal parameter comprises: signal transmit power, a transmit end aperture gain, a receive end aperture gain, a transmit beam pointing, and a receive beam pointing, wherein

the second moment is later than the first moment; and a value of the first parameter is determined based on a first product, the first product being a product of the signal transmit power, the transmit end aperture gain, the receive end aperture gain, a cosine value of the transmit beam pointing, and a cosine value of the receive beam pointing.

24. The apparatus according to claim 23, wherein the first obtaining module comprises:

a first obtaining submodule, configured to the first value of the first parameter corresponding to the first target;
or
a second obtaining submodule, configured to obtain the first value of the first parameter corresponding to the first target according to first parameter adjustment information sent by the second device, wherein the first parameter adjustment information comprises any one of the following:

the first value of the first parameter;
a ratio of the first value of the first parameter to a second value of the first parameter; and
a difference between the first value of the first parameter and the second value of the first parameter, wherein the second value of the first parameter is determined based on a signal parameter corresponding to signal transmission and a signal parameter corresponding to echo signal reception at the first moment.

25. The apparatus according to claim 24, wherein the first obtaining submodule comprises:

a first determining unit, configured to determine the first value of the first parameter according to echo signal quality of the first target at the first moment;
or
a second determining unit, configured to determine the first value of the first parameter according to a predicted distance value of the first target at the second moment and echo signal quality of the first target at the first moment.

26. The apparatus according to claim 25, wherein the first determining unit comprises:

a first determining subunit, configured to determine the first value of the first parameter according to the second value of the first parameter, the echo signal quality of the first target at the first moment, and first preset echo quality in a case that the echo signal quality of the first target is maintained near the first preset echo quality;
or
a second determining subunit, configured to determine the first value of the first parameter according to the second value of the first parameter, the echo signal quality of the first target at the first moment, and a first echo quality range in a case that the echo signal quality of the first target is maintained in the first echo quality range.

27. The apparatus according to claim 25, wherein the second determining unit comprises:

a third determining subunit, configured to determine the first value of the first parameter according to the second value of the first parameter, the echo signal quality of the first target at the first moment, first preset echo quality, and the predicted distance value of the first target at the second moment in a case that the echo signal quality of the first target is maintained near the first preset echo quality;
or
a fourth determining subunit, configured to determine the first value of the first parameter according to the second value of the first parameter, the echo signal quality of the first target at the first moment, a first echo quality range, and the predicted distance value of the first target at the second moment in a case that the echo signal quality of the first target is maintained in the first echo quality range.

28. The apparatus according to claim 23, wherein the first configuration module comprises:

a first configuration submodule, configured to configure the transmit beam pointing and the receive beam pointing according to a first angle of the first target relative to a transmit end device and a second angle of the first target relative to a receive end device;
a determining submodule, configured to determine a lower limit of a transmit end antenna aperture and a lower limit of a receive end antenna aperture according to an antenna aperture of a resolution requirement in a sensing requirement, and the determined transmit beam pointing and the determined receive beam pointing; and
a second configuration submodule, configured to configure the signal transmit power, the transmit end aperture gain, and the receive end aperture gain according to the lower limit of the transmit end antenna aperture, the lower limit of the receive end antenna aperture, the transmit beam pointing, and the receive beam pointing, to meet the first value of the first parameter.

29. A communication device, comprising a processor and a memory, the memory storing a program or instructions executable on the processor, the program or instructions, when executed by processor, implementing the steps of the wireless sensing parameter determining method according to any one of claims 1 to 22.

30. A readable storage medium, storing a program or instructions, the program or instructions, when executed by a processor, implementing the steps of the wireless sensing parameter determining method according to any one of claims 1 to 22.

FIG. 1

Start

A first device obtains a first value of a first parameter corresponding to a first target

201

The first device configures a signal parameter of the first target according to the first value of the first parameter, where the signal parameter of the first target is used for indicating signal transmission and echo signal reception at a second moment; and the signal parameter includes: signal transmit power, a transmit end aperture gain, a receive end aperture gain, a transmit beam pointing, and a receive beam pointing

202

End

FIG. 2

Sensing function
network element

Transmit end
device

Receive end
device

FIG. 3

Sensing function
network element

Transmit end
device

Receive end
device

FIG. 4

Sensing function
network element

Transmit end
device/receive end
device

Receive end device/
transmit end device

FIG. 5

Sparse array                          Dense array

2-element
sparse array

Equivalent ⟹

3-element sparse
array

4-element
sparse array —

▨  Antenna elements used

☐  Antenna elements not used

FIG. 6

Wireless sensing parameter determining apparatus

First obtaining module                    701

First configuration module                702

700

FIG. 7

800

Communication device

801 — Processor ⟷ Memory — 802

## FIG. 8

900

91

Communication device

94 — Processor ⟷

95 — Memory ⟷

Bus interface

Radio frequency apparatus — 92

Baseband apparatus — 93

⟷ Network interface

96

## FIG. 9

## INTERNATIONAL SEARCH REPORT

| | International application No. |
|---|---|
| | **PCT/CN2022/139835** |

| A. CLASSIFICATION OF SUBJECT MATTER |
|---|
| H04W24/02(2009.01)i |
| According to International Patent Classification (IPC) or to both national classification and IPC |

| B. FIELDS SEARCHED |
|---|
| Minimum documentation searched (classification system followed by classification symbols) |
| IPC:H04W; H04Q; H04L |
| Documentation searched other than minimum documentation to the extent that such documents are included in the fields searched |
| Electronic data base consulted during the international search (name of data base and, where practicable, search terms used) |
| CNKI; CNPAT; WPI; EPODOC; IEEE: 目标, 感知, 参数, 发射, 发送, 接收, 波束, 功率, 孔径, 增益, 回波, 响应, 指向, 乘积, 取值, beam, echo, gain, power, aperture, radius, parameter?, response, target, sens+, send, receiv+, direction, value |

| C. DOCUMENTS CONSIDERED TO BE RELEVANT | | |
|---|---|---|
| Category* | Citation of document, with indication, where appropriate, of the relevant passages | Relevant to claim No. |
| A | CN 113825236 A (ZHEJIANG UNIVERSITY) 21 December 2021 (2021-12-21) description, paragraphs 45-79 | 1-30 |
| A | CN 108702710 A (HUAWEI TECHNOLOGIES CO., LTD.) 23 October 2018 (2018-10-23) entire document | 1-30 |
| A | CN 111512565 A (SONY CORP.) 07 August 2020 (2020-08-07) entire document | 1-30 |
| A | CN 112769719 A (SOUTH CHINA UNIVERSITY OF TECHNOLOGY) 07 May 2021 (2021-05-07) entire document | 1-30 |
| A | CN 113747365 A (CHINA UNITED NETWORK COMMUNICATIONS GROUP CO., LTD.) 03 December 2021 (2021-12-03) entire document | 1-30 |
| A | US 2020358501 A1 (QUALCOMM INC.) 12 November 2020 (2020-11-12) entire document | 1-30 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 February 2023** | **16 February 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/139835**

| Patent document cited in search report | | | Publication date (day/month/year) | Patent family member(s) | | | Publication date (day/month/year) |
|---|---|---|---|---|---|---|---|
| CN | 113825236 | A | 21 December 2021 | None | | | |
| CN | 108702710 | A | 23 October 2018 | EP | 4087332 | A1 | 09 November 2022 |
| | | | | WO | 2018086246 | A1 | 17 May 2018 |
| | | | | US | 2019357153 | A1 | 21 November 2019 |
| | | | | KR | 20190076052 | A | 01 July 2019 |
| | | | | JP | 2021121124 | A | 19 August 2021 |
| | | | | US | 2022191804 | A1 | 16 June 2022 |
| | | | | EP | 3534652 | A1 | 04 September 2019 |
| | | | | JP | 2019537907 | A | 26 December 2019 |
| CN | 111512565 | A | 07 August 2020 | US | 2021013954 | A1 | 14 January 2021 |
| | | | | KR | 20200104854 | A | 04 September 2020 |
| | | | | WO | 2019129006 | A1 | 04 July 2019 |
| | | | | EP | 3734851 | A1 | 04 November 2020 |
| | | | | CN | 109995405 | A | 09 July 2019 |
| CN | 112769719 | A | 07 May 2021 | None | | | |
| CN | 113747365 | A | 03 December 2021 | None | | | |
| US | 2020358501 | A1 | 12 November 2020 | WO | 2020227482 | A1 | 12 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111580756